# EUROPÄISCHE PATENTSCHRIFT

(11) **EP 3 691 847 B1**
(45) Veröffentlichungstag und Bekanntmachung des Hinweises auf die Patenterteilung: **29.12.2021**
(21) Anmeldenummer: 18800875.9
(22) Anmeldetag: 05.11.2018
(51) Int. Cl.: B27K 3/34, B27N 3/06, C08G 73/02, C08L 79/02

(54) **HARZ-ZUSAMMENSETZUNG, HARZBESCHICHTUNG, DIESE ENTHALTENDE LAMINATE UND IMPRÄGNATE SOWIE VERFAHREN ZU DEREN HERSTELLUNG**
RESIN COMPOSITION, RESIN COATING, LAMINATES AND IMPREGNATION PRODUCTS CONTAINING SAME, AND METHOD FOR PRODUCING SAME
COMPOSITION DE RÉSINE, REVÊTEMENT EN RÉSINE, STRATIFIÉS ET PAPIERS IMPRÉGNÉS LES COMPRENANT ET PROCÉDÉ DE FABRICATION DE CEUX-CI

(30) Priorität: 09.11.2017 DE 102017010366
(43) Veröffentlichungstag der Anmeldung: 12.08.2020
(60) Teilanmeldung: 20184607.8
(73) Patentinhaber: Fritz Egger GmbH & Co. OG, 6380 St. Johann in Tirol (AT)
(72) Erfinder: HEINRICH, Holger, 23970 Benz (DE)
(74) Vertreter: Cohausz & Florack
(86) Internationale Anmeldenummer: PCT/EP2018/080149
(87) Internationale Veröffentlichungsnummer: WO 2019/091908

(56) Entgegenhaltungen:
- DE-B3-102016 108 551
- US-B1- 7 288 264

## Beschreibung

Die Erfindung betrifft eine Harz-Zusammensetzung sowie eine Harzbeschichtung. Ein weiterer Gegenstand der Erfindung ist ein Imprägnat enthaltend die Harz-Zusammensetzung und/oder die Harzbeschichtung. Ferner betrifft die Erfindung ein Laminat enthaltend das Imprägnat sowie Verfahren zu deren Herstellung. Ferner betrifft die Erfindung auch die Verwendung der Harz-Zusammensetzung oder der Harzbeschichtung in der Holzwerkstoff-, Imprägnat- und/oder Laminatherstellung.

Harze werden vor allem für die Veredelung von lackierbaren Oberflächen jeglicher Art sowie für die Herstellung von Laminaten und/oder Imprägnaten in der holz- und papierverarbeitenden Industrie verwendet.

Die für die Veredelung von lackierbaren Oberflächen jeglicher Art, wie z.B. Wand-, Fußboden-, Decken- und Möbeloberflächen, verwendeten Harze werden üblicherweise als "Lackharze" bezeichnet, während die für die Herstellung der Laminate und Imprägnate verwendeten Harze als "Imprägnierharze" bezeichnet werden.

"Lackharze" dienen zur Oberflächenveredelung und liegen als oberste Schicht auf der jeweiligen lackierbaren Oberfläche vor. Neben dem Schutz der Oberfläche vor äußeren Einflüssen wie Abnutzung und Verkratzung müssen Lackharze, dadurch dass sie als oberflächlichste Schicht aufgetragen werden, höchsten optischen Anforderungen, vor allem die Transparenz betreffend, genügen. Oftmals befindet sich vom Endbenutzer aus betrachtet unterhalb des Lackharzes eine dekorative Materialoberfläche, welche uneingeschränkt sichtbar, gleichmäßig und farbecht erscheinen soll.

"Imprägnierharze" dienen zum Imprägnieren, Tränken und/oder Beschichten von Trägermaterialien wie beispielsweise von Dekorpapieren oder Holzwerkstoffen bei der Laminatherstellung. "Imprägnierharz", wie hier verwendet, ist dabei gleichbedeutend mit dem vom Fachmann ebenfalls benutzten Ausdruck "Tränkharz". Imprägnierharze können von dem Trägermaterial ganz oder teilweise aufgesogen und/oder in Form einer Schicht auf oder in diesem vorliegen. Ein Beispiel für ersteres ist ein imprägniertes Overlaypapier, ein Beispiel für letzteres ist ein sogenanntes Flüssig-Overlay.

Imprägnierharze finden vor allem in der Laminatherstellung Anwendung. Laminate, wie sie beispielsweise als Fußbodenpaneele oder in der Möbelherstellung verwendet werden, weisen üblicherweise einen schichtweisen Aufbau auf, wobei die oberste Schicht meist aus einer Schicht, die ein Imprägnierharz enthält, besteht. Typische Beispiele für diese obersten Laminatschichten sind Imprägnate, wie Overlay- oder Dekorpapiere, die mit einem Imprägnierharz imprägniert sind. Die oberste Schicht kann jedoch auch eine eigens aufgetragene Schicht Imprägnierharz, beispielsweise in Form eines sogenannten Flüssig-Overlays, sein. Overlaypapier und Flüssig-Overlay Schichten dienen, wie auch Lackschichten, dem Schutz der Oberfläche vor äußeren Einflüssen wie Abnutzung und Verkratzung. Wenn Imprägnierharze, als oberflächlichste Schicht aufgetragen werden, müssen auch Sie höchsten optischen Anforderungen, vor allem die Transparenz betreffend, genügen. Unterhalb des Imprägnierharzes befindet sich oftmals vom Endbenutzer aus betrachtet das eigentliche Dekor des Laminats, welches uneingeschränkt sichtbar, gleichmäßig und farbecht erscheinen soll.

An Laminate, egal ob im Fußboden- oder Möbelbereich, und an die zu ihrer Herstellung verwendeten Harze werden hohe Anforderungen gestellt. Diese sind beispielsweise in der DIN EN 13329 wiedergeben. Laminate müssen daher nicht nur gute Eigenschaften hinsichtlich ihrer Weiterverarbeitung aufweisen, sondern müssen aufgrund ihrer starken Beanspruchung, vor allem als Fußboden, an ihrer Oberseite eine hervorragende Kratz- und Abriebfestigkeit aufweisen. Diese ist beispielsweise in DIN EN 13329 festgelegt und kann mittels eines modifizierten Martindale Tests, einem genormten Prüfverfahren zur Bestimmung der Mikrokratzbeständigkeit bei Laminatböden (DIN EN ISO 12947:04/1999 bzw. IHD W-445, Version Mai 2007), bestimmt werden. Um die Oberflächenbeständigkeit von Laminat und/oder Holzwerkstoffen zu erhöhen, ist es bekannt, die Dekor- und/oder Overlaypapiere bzw. die Oberfläche des Holzwerkstoffs noch mit einer eigens aufgetragenen Schicht, beispielsweise in Form eines sogenannten transparenten Flüssig-Overlays oder Overlayfilms, zu beschichten. Ferner kann zusätzlich eine Lackschicht auf die Oberfläche der Laminat und/oder Holzwerkstoffe aufgebracht werden um diese weiter zu veredeln, d.h. beispielsweise die Oberflächenbeständigkeit weiter zu erhöhen.

Weitere Anforderungen an die oberste Schicht des Laminats, unabhängig davon ob diese Imprägnierharz enthält oder hieraus besteht oder es sich um eine Lackharzschicht handelt, sind die oben bereits beschriebenen optischen Eigenschaften, wie hohe Transparenz, Licht- und Farbechtheit, optische Güte sowie gewollte optische Effekte wie Glanz oder Mattheit der Oberfläche.

Die gleichzeitige Erfüllung dieser mechanischen (z.B. Härte, Abriebfestigkeit, Kratzfestigkeit und/oder Abnutzungsbeständigkeit) und optischen Anforderungen ist bei der Wahl des Harzes eine große Herausforderung.

In der Praxis werden diese noch am besten von auf Aminoplast-Harz, insbesondere Melamin-Formaldehyd-Harz, oder strahlenhärtendem Acrylatharz basierenden Harz-Zusammensetzungen erzielt, die im Fall von Imprägnierharz-Zusammensetzungen als weitere Komponenten Netzmittel, Trennmittel und Härter enthalten.

Diese Art hochqualitative Harz-Zusammensetzungen weiter zu verbessern, ist Gegenstand der vorliegenden Erfindung. Derartige hochqualitative Harz-Zusammensetzungen werden nachfolgend auch "gattungsgemäße Harz-Zusammensetzungen" genannt.

Aminoplastharze sind sehr vielseitige Kunststoffe, die in den unterschiedlichsten Zusammensetzungen und Formen eingesetzt werden. Dem in der holz- und papierverarbeitenden Industrie tätigen Fachmann sind Aminoplastharze neben dem Imprägnieren, Tränken und/oder Beschichten von Oberflächen vor allem auch als Leime, z.B. für die Spanplattenherstellung, allgemein bekannt. Wiederum gänzlich andere Aminoplastharze kommen bei der Herstellung von Formkörpern aus Hartplastik, beispielsweise Melamin-Kochgeschirr, zum Einsatz. Aminoplastharze bzw. Aminoplaste werden in "Ullmanns Enzyklopädie der technischen Chemie", 4. Auflage, 1974, im Kapitel "Aminoplaste" in Band 7 oder in "Holzwerkstoffe und Leime" von Dunky und Niemz, 1. Auflage, 2002, in Band I, Teil II, Kapitel 1 beschrieben. Unter dem Begriff Aminoplaste versteht man allgemein Kondensationsprodukte, die durch Umsetzung einer Carbonylverbindung, in der Praxis meist Formaldehyd, mit einer Amino-, Imino-oder Amidgruppen enthaltenden Komponente erhalten werden.

Bei den in der holz- und papierverarbeitenden Industrie als Imprägnierharz verwendeten Aminoplastharzen handelt es sich häufig um Aminoplast-Vorkondensate, deren Methylolgruppen unverethert oder mit Alkoholen teilweise verethert sind. Wirtschaftlich am bedeutendsten sind in diesem Zusammenhang Harnstoff-Melamin-Formaldehyd-Harze sowie Melamin-Formaldehyd-Harze. Insbesondere bei den oben erwähnten, als oberste Schicht in der Laminatherstellung verwendeten Imprägnierharzen kommen wegen der hohen mechanischen und optischen Anforderungen vornehmlich Melamin-Formaldehyd-Harze zum Einsatz.

Melamin-Formaldehyd-Harze sowie deren Herstellung bzw. Kondensation oder Aushärtung sowie Modifizierungen sind dem Fachmann allgemein bekannt und in "Holzwerkstoffe und Leime" von Dunky und Niemz, 1. Auflage, 2002, in Band I, Teil II, Kapitel 1 beschrieben. Melamin-Formaldehyd-Harze werden aus Melamin und Formaldehyd unter Verwendung von Härtern hergestellt. Als Zwischenprodukt werden Hydroxymethylolmelamine (Hexamethylolverbindungen) durch Addition von Formaldehyd an Melamin in Suspensionen oder wässriger Lösung gewonnen. Je nach Menge an Formaldehyd bilden sich Tri- bis hin zu Hexa-Hydroxymethylolmelamine. Diese Reaktionsschritte sind schematisch in dem folgenden Reaktionsschema 1 dargestellt:

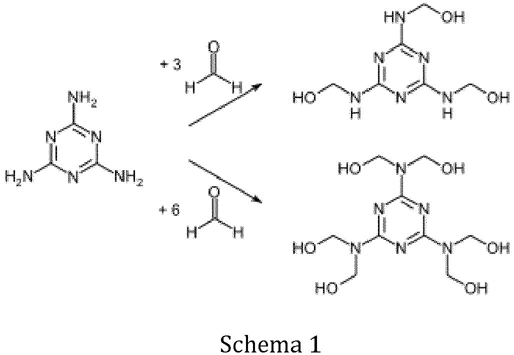

Diese Vorstufen sind lagerfähig und werden - wie auch weiter fortgeschrittene Kondensationsstufen (siehe unten) - vom Fachmann auch als "Vorkondensate" bezeichnet.

Unter Druck und/oder erhöhter Temperatur erfolgt ausgehend von den Vorkondensaten eine weitere (oder auch bereits die vollständige) Kondensation bzw. Aushärtung des Aminoplasts. Diese kann abhängig von Druck und/oder Temperatur stufenweise erfolgen, so dass sich eine weitere Vorkondensatmischung bilden kann, die dann sowohl obige Hydroxymethylolmelamine also auch bereits (teil)-ausgehärtetes Melamin-Formaldehyd-Harz enthält. Die Kondensationsreaktionen führen zur Verknüpfung der Monomere über Ether- und Methylengruppen. Bei vollständiger Kondensation bzw. Aushärtung bildet sich ein engmaschig über Methylengruppen vernetzter Kunststoff. In Schema 2 ist beispielhaft ein vernetztes Melamin-Formaldehyd-Harz dargestellt, wobei die gestrichelten Linien die Fortsetzung des Makromoleküls andeuten. 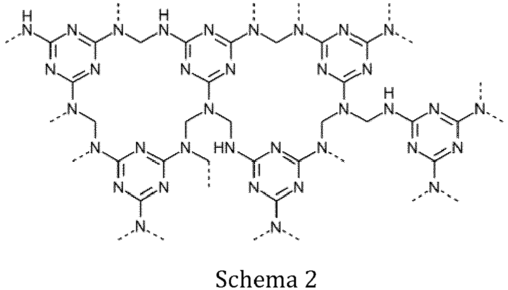 Aminoplaste werden in der Regel im wässrigen Medium hergestellt.

Strahlenhärtende Acrylatharze sind bei Raumtemperatur härtende Reaktionsharze, deren radikalische Polymerisation durch UV-, Elektronenstrahlung oder sichtbares Licht erfolgt. Typische Anwendungsfelder für derartige UV-härtende Acrylharze sind in der Elektronik-, Druckerei-, Holzverarbeitenden- und Papierindustrie zu finden, insbesondere werden Sie zur Formulierung von Möbel- und Fußbodenlacken, Druckfarben und Überdrucklacken wie auch für Kunststoff- und Metallsubstrate verwendet. Derartige strahlenhärtende Acrylatharze beinhalten als wesentliche Komponenten strahlenhärtbare monomere oder oligomere Acrylate und Photoinitiatoren als Härter, die die Aushärtereaktion, im Allgemeinen eine radikalische Polymerisation, unter UV-Bestrahlung auslösen. Strahlenhärtende Acrylatharze sowie deren Herstellung, Aushärtung durch UV- und Elektronenstrahlung sowie Modifizierungen sind dem Fachmann allgemein bekannt und beispielsweise in "Lackiertechnik" von Goldschmidt und Streitberger, 2002, Vincentz Verlag Hannover, auf den Seiten 123 bis 127 sowie im Kapitel 4.3.2 beschrieben.

Die strahlenhärtbaren Acrylatharze enthalten endständige aktive Doppelbindungen, die üblicherweise durch den Einbau endständiger Acrylsäureestergruppen eingefügt werden. Übliche strahlenhärtbare Acrylatharze sind z.B. Epoxyacrylate, Polyesteracrylate, Polyetheracrylate und Urethanacrylate und andere Acrylsäurefunktionalisierte Oligomere, wie sie beispielsweise von der BASF unter der Marke Laromer^{®} vertrieben werden. Zur Herstellung der Oligomere wird das entsprechende Präpolymer, das entweder über endständige Epoxid- oder Hydroxylgruppen verfügt, mit Acrylsäure zur Reaktion gebracht.

Zur Aushärtung der strahlenhärtenden Acrylatharze sind Photoinitiatoren als Härter zwingend notwendig. Solche Photoinitiatoren werden beispielsweise unter der Marke Irgacur^{®} von der BASF vertrieben. Die Photoinitiatoren werden unter Einfluss von UV-Strahlung, typischerweise im Wellenlängenbereich zwischen 180 nm und 380 nm, homolytisch in Radikale gespalten und starten die radikalische Polymerisationsreaktion der strahlenhärtenden Acrylatharze. Da Sauerstoff als Biradikal an der radikalischen Polymerisationsreaktion teilnehmen kann und diese inhibiert, wird die Aushärtung von strahlenhärtenden Acrylatharzen üblicherweise möglichst unter Ausschluss der Umgebungsluft durchgeführt. Dies kann beispielsweise anlagentechnisch durch die Verwendung einer Stickstoffumgebung oder Polymerisation unter einer Folie erreicht werden.

Entsprechend der charakteristischen Eigenschaften der Präpolymere haben sich die strahlenhärtenden Acrylatharze spezifische Anwendungsgebiete erobert. So führen die reaktiven Epoxyacrylate zu Lackoberflächen mit hoher Chemikalienbeständigkeit. Lackoberflächen aus Polyesteracrylaten sind hoch lichtbeständig und deshalb für die Holzveredelung, Holzwerkstoffveredelung und Laminatveredelung, geeignet. Die Lackoberflächen aus Urethanacrylaten eignen sich wegen ihrer Zähigkeit, ihrer guten Haftung und Abriebfestigkeit ebenfalls für die Beschichtung von Holzwerkstoffen, Laminaten, und Holz sowie für die Beschichtung von Kunststoffen.

Im Stand der Technik lag der Fokus bei gattungsgemäßen Harz-Zusammensetzungen bislang auf der Optimierung der optischen und mechanischen Oberflächeneigenschaften. Eine Oberflächeneigenschaft, die bei Harzen bislang zum einen keine große Rolle gespielt hat, für die der Stand der Technik aber auch keine zufriedenstellende Lösung bereitstellt, sind antimikrobielle Eigenschaften.

Grundsätzlich besteht jedoch eine hohe Nachfrage an Oberflächen mit antimikrobiellen Eigenschaften. Dies gilt sowohl für Laminate, die im Fußboden- und/oder Möbelbereich eingesetzt werden als auch für solche, die in Bereichen eingesetzt werden, an die höhere hygienische Anforderungen gestellt werden. Speziell für stark beanspruchte Oberflächen mit erhöhten hygienischen Anforderungen, z.B. im medizinischen und öffentlichen Bereich, aber auch in Laboratorien, Küchen sowie im Sanitär- und Wohnbereich sind antimikrobielle Oberflächen im Hinblick auf die Gesundheit und Lebensqualität der Benutzer wünschenswert und können helfen, Kontaminationen und Infektionen zu vermeiden. Dies trifft auch für besondere Feuchtigkeit ausgesetzten Oberflächen, z.B. in Dach-, Keller- oder Wandbereichen, zu.

Vor diesem Hintergrund ist es erstrebenswert, verbesserte Harz-Zusammensetzungen und daraus hergestellte Harz-Schichten, Imprägnate und Laminate, bereitzustellen, deren Oberflächen eine erhöhte Beständigkeit gegenüber Mikroorganismen aufweisen, ohne dass es hierdurch zu einer Beeinträchtigung der im Stand der Technik bereits erzielbaren hervorragenden optischen und mechanischen Eigenschaften käme.

Zur Vermeidung bzw. Verringerung von mikrobiellem Befall wurde im Stand der Technik grundsätzlich bereits der Versuch unternommen verschiedene Substanzen mit antimikrobieller, biozider bzw. fungizider Wirkung bei der Laminatherstellung bzw. Oberflächenveredelung einzusetzen. Chemikalien, die den Befall durch holzzerstörende und -verfärbende Pilze oder Insekten verhindern (vorbeugender Holzschutz) bzw. im Falle eines bereits eingetretenen Befalls Schadorganismen abtöten (bekämpfender Holzschutz) sollen, enthalten in der Regel stets Biozide als wirksame Bestandteile. Biozide sind in der Biozid-Verordnung (EU) Nr. 528/2012 klassifiziert.

So sind aus dem Stand der Technik vereinzelte Biozide und Additive zur antimikrobiellen Ausstattung von Harzen im Allgemeinen bekannt. Für die antimikrobielle Ausstattung speziell von gattungsgemäßen Harz-Zusammensetzungen, die im Fall von Imprägnierharz-Zusammensetzungen neben Harz noch mindestens Netzmittel, Trennmittel und Härter enthalten, und die oben genannten mechanischen und optischen Eigenschaften zufriedenstellend erfüllen, gibt es im Stand der Technik jedoch keine Lösungen oder Hinweise.

Die JP 08073702 A beschreibt beispielsweise antibakterielle Melaminharze, die eine Mischung von Aluminium-, Magnesium- und Siliziumoxiden sowie elementares Silber und Zink als antibakteriellen Wirkstoff enthalten. Damit konnten antibakterielle Eigenschaften für bis zu 48 Stunden erreicht werden. Der Nachteil dieser Lösung ist die nur kurz andauernde antibakterielle Eigenschaft und die große Anzahl an notwendigen antibakteriellen Einzelkomponenten. Je mehr Einzelkomponenten einem Harz zugegeben werden, umso schwieriger ist es, alle Bestandteile der Harzflotte mengenmäßig optimal und ohne Beeinträchtigung hinsichtlich der gewünschten mechanischen und optischen Eigenschaften aufeinander abzustimmen.

Die WO 03/009827 A1 beschreibt Melaminharze, die eine Mischung aus einem Diphenyletherderivat und Orthophenylphenol als antimikrobielle Komponenten enthalten. Nachteilig an diesen Additiven ist, dass sie leicht von der Harzoberfläche ausgewaschen werden, so dass die antibakterielle Wirkung mit der Zeit abnimmt und Chemikalien an die Umwelt abgegeben werden.

Die US 6248342 B1 beschreibt antibakterielle Laminate, in deren melaminharzgetränkter Oberfläche eine anorganische, ein Metallion enthaltende antibakterielle Komponente eingearbeitet ist. Als antibakterielle Komponente werden bevorzugt Zeolite verwendet, welche Metallionen wie beispielsweise Ag, Cu, Zn, Hg, Sn, Pb, Bi, Cd, Cr oder Mischungen davon enthalten. Durch lonenaustauschprozesse gelangen die Metallionen an die Laminatoberfläche und ermöglichen so die antibakterielle Wirkung. Nachteilig hieran ist, dass die Metallionen in Oxide, Hydroxide oder sonstige Salze umgewandelt werden können und sich dann in dieser Form an der Laminatoberfläche absetzen, wo sie die antibakterielle Wirkung abschwächen. Aus gesundheitlicher Sicht ist auch der Einsatz der oben genannten Schwermetalle bedenklich.

Die US 7 288 264 B1 beschreibt Gegenstände, Vorrichtungen oder Formulierungen, die ein nicht auslaugbares antimikrobielles Material enthalten, das eine Kombination aus einer organischen Matrix mit bioziden metallischen Materialien ist.

Die DE 10 2016 108551 B3 beschreibt eine Faserplatte erhältlich durch Verpressen von mit Bindemittel beleimten, lignocellulosehaltige Fasern, wobei mindestens eine polymere Mono-Guanidin-Verbindung im Bereich mindestens einer der beiden Oberflächen der Faserplatte zur Erhöhung der Beständigkeit der Faserplatte gegen Pilzbefall konzentriert ist, sowie deren Herstellungsverfahren.

Aufgrund der oben beschriebenen Nachteile können viele antimikrobielle Additive bzw. Holzschutzmittel, die biozide Substanzen enthalten, nicht optimal im Innenausbau verwendet werden. Weiterhin können die Biozide aufgrund ihrer potentiellen Emission durch Verdunstung, Abrieb oder durch anderweitige Freisetzung die Gesundheit von Menschen und deren Umwelt beeinträchtigen. Oftmals verlieren Biozide aber auch durch allmählichen (natürlichen) Abbau ihre Wirkung. Die wasserlöslichen oder wasserbasierten Biozid-enthaltenden Holzschutzmittel können beispielsweise mit der Zeit ausgewaschen werden, wodurch einerseits die antimikrobielle Eigenschaft der Oberfläche nachlässt und andererseits eine erhöhte Umweltbelastung auftreten kann. Nachteilig an den bislang vorgeschlagenen Bioziden ist ferner, dass diese zum einen stark gesundheitsschädlich sind und sich zum andern schlecht in die bei der Oberflächenbeschichtung verwendeten gängigen Harze integrieren lassen und/oder mit diesen inkompatibel sind.

Der vorliegenden Erfindung ist eine umfangreiche Forschungstätigkeit vorausgegangen, bei der zahlreiche als antimikrobielle Additive in Frage kommende Stoffe in gattungsgemäßen Harz-Zusammensetzungen getestet wurden. Hierbei sahen sich die Erfinder vor gravierende Probleme gestellt. Viele Additive verloren nach Aushärtung des Harzes ihre antimikrobiellen Eigenschaften. Dies ließ sich zum einen durch Verlust der antimikrobiellen Struktureinheiten durch Abreaktion während der Vernetzungsreaktion des Harzes erklären. Andere Additive erwiesen sich jedoch auch einfach nicht als genügend temperaturbeständig, um den bei der Imprägnat- und Laminatherstellung auftretenden hohen Press- und Trocknungstemperaturen standzuhalten. Einige Additive waren mit den üblichen Komponenten der gattungsgemäßen Harze inkompatibel oder störten die Vernetzungsreaktion, sodass eine Verschlechterung der mechanischen und/oder der optischen Eigenschaften des Harzes die Folge war. Bei der Mehrzahl der getesteten Additive kam es nicht zu einer Verankerung in der Harzmatrix, wodurch die Additive in den fertigen Produkten mittels wässriger Flüssigkeiten oder der in gängigen Reinigungsmitteln vorhandenen organischen Lösungsmittel auswaschbar waren, was mit einer Abnahme der antimikrobiellen Oberflächeneigenschaften über die Zeit einherging.

Weiterhin gilt es im Sinne einer nachhaltigen Rohstoffnutzung, einen antimikrobiellen Wirkstoff zu finden, der sich nicht negativ auf die Qualität recyclingfähiger Materialien auswirkt. Die regelmäßig in transparenter Ausführung vorliegenden Harz-haltigen Beschichtungen unterliegen zudem häufig direkter Sonneneinstrahlung. Ein geeigneter antimikrobieller Wirkstoff muss daher über eine ausreichende UV-Stabilität verfügen und darf zu keiner farblichen Beeinträchtigung führen.

Schließlich kommen bei der Verarbeitung marktüblicher gattungsgemäßer Harz-Zusammensetzungen, je nach Produktanforderung, eine Vielzahl weiterer Additive zum Einsatz. Mit diesen muss der antimikrobielle Wirkstoff ebenfalls vollständig kompatibel sein, um eine Verschlechterung der Harzeigenschaften zu vermeiden.

Um das Problem der Auswaschbarkeit zu adressieren, wurden auch andere Additive, bei denen es zu einer Polymerisation oder Einpolymerisation in die Harzmatrix kam, getestet. Diese verloren hierdurch jedoch vielfach ihre antimikrobiellen Eigenschaften und/oder beeinträchtigten die Netzwerkstruktur der Harzmatrix, was mit einer Verschlechterung der mechanischen und/oder der optischen Eigenschaften des Harzes einherging.

Es wurden in diesem Zusammenhang insbesondere auch antimikrobielle Substanzen mit funktionellen Gruppen getestet, welche in der Lage sind, in die Harzmatrix gattungsgemäßer Harz-Zusammensetzungen einzupolymerisieren. Gegenüber derartigen Mischvernetzungsprodukten bestanden jedoch zu recht erheblich Bedenken. So stellt eine derartige antimikrobielle Funktionalisierung einer dekorativen Harzbeschichtung an den einzusetzenden antimikrobiellen Wirkstoff sehr hohe Anforderungen. Es gilt hier besonders, die extremen Verarbeitungstemperaturen der Trocknungs- und Pressaggregate zu überstehen und andererseits die gewünschten und fein ausbalancierten mechanischen und optischen Eigenschaften der Harze nicht nachteilig zu verändern. Weiterhin muss der antimikrobielle Wirkstoff mit dem Harz mischbar sein, in die Harzmatrix einpolymerisierbar sein und darf die Vernetzung der Harzmatrix nicht stören.

In der Vergangenheit wurden mit Mischpolymerisationsprodukten, wie beispielsweise Co-Kondensaten bzw. Co-Polymerisaten aus Melamin-Formaldehyd-Harzen mit Harnstoff, schlechte Erfahrungen gemacht. Selbst eine Co-Polymerisation mit Harnstoff, führt zu einer unerwünschten Trübung und Verschlechterung der mechanischen Eigenschaften des Harzes. Dies ist insofern bemerkenswert, als dass Harnstoff und Melamin strukturverwandt sind und zwischen diesen beiden Stoffen noch am ehesten eine Kompatibilität zu erwarten gewesen wäre. Dennoch genügten diese Harnstoff-Melamin-Formaldehyd Mischkondensationsprodukte nicht den hohen Anforderungen, die an Harze, insbesondere Imprägnier- und Lackharze, gestellt werden.

Die Co-Polymerisation mit Harnstoff scheint zu einem inhomogeneren Harz zu führen, welches, wenn es ausgehärtet ist, weicher als reine Melamin-Formaldehydharze ist. Weiterhin zeigten diese Mischpolymerisationsprodukte auch nicht die gewünschte Transparenz. Ohne an eine wissenschaftliche Theorie gebunden sein zu wollen, scheint sich die Eintrübung dadurch erklären zu lassen, dass sich durch das Einpolymerisieren des Harnstoffs "Störstellen" in der sonst gleichmäßigen Melamin-Formaldehyd-Harzmatrix zu bilden scheinen, die einer homogenen Kondensation und damit Aushärtung bzw. Vernetzung des Harzes entgegenstehen. An diesen "Störstellen" ist das Harz wahrscheinlich nicht mehr dazu in der Lage, sich optimal weiter zu vernetzen und damit gleichmäßig auszuhärten. Insgesamt ist festzuhalten, dass es den Harnstoff-Melamin-Formaldehyd-Harzen an der geforderten Kombination aus mechanischer Festigkeit, d.h. Abriebfestigkeit und Kratzbeständigkeit, und der hochtransparenten und optisch ansprechenden Erscheinung mangelt. Aus diesem Grund werden beispielsweise bei der Laminatherstellung, zumindest für die oberste Schicht, die höchsten Anforderungen genügen muss, heute immer noch reine Melamin-Formaldehyd-Harze in den gattungsgemäßen Harz-Zusammensetzungen eingesetzt.

Ähnliche Probleme können sich auch bei den strahlungshärtenden Acrylatharzen ergeben. Die Zugabe eines radikalisch reaktionsfähigen Co-Monomers kann auch hier, je nach Ausgestaltung des Co-Monomers, zum Kettenabbruch der radikalischen Polymerisation führen, wodurch "Störstellen" in der sonst gleichmäßigen Acrylatharzmatrix entstehen und es zu einer Inhibierung der Polymerisationsreaktion kommt, die einer homogenen Polymerisation und damit Aushärtung bzw. Vernetzung des Harzes entgegensteht.

Vor diesem Hintergrund bestanden gegenüber einpolymerisierbaren antimikrobiellen Additiven bereits Bedenken, die sich in praktischen Versuchen dann auch bestätigt haben. Ähnlich wie bei der Mischpolymerisation mit Harnstoff war es bei den getesteten einpolymerisierbaren antimikrobiellen Substanzen nicht möglich, antimikrobielle Oberflächen zu erzeugen ohne dass es zu Einbußen hinsichtlich der Transparenz und mechanischen Eigenschaften kam.

Bei der Suche nach einem antimikrobiellen Harz bestand somit das Dilemma, dass der antimikrobielle Wirkstoff auf der einen Seite über einen langen Zeitraum aktiv bleiben und dafür über eine ausreichende Fixierung in der Oberfläche verfügen sollte, dabei aber wiederum seine antimikrobiellen Eigenschaften nicht verlieren und die mechanischen und optischen Eigenschaften gattungsgemäßer Harz-Zusammensetzungen nicht stören darf. Eine kovalente Einbindung innerhalb der Harzmatrix ist aufgrund der oben diskutierten Probleme daher genauso wünschenswert wie problematisch, v.a. im Hinblick auf die Erhaltung der mechanischen und optischen Eigenschaften des Harzes.

Zusammenfassend kann festgehalten werden, dass gattungsgemäße Harz-Zusammensetzungen ein vielfältiges Anforderungsprofil mit teilweise gegenläufigen Eigenschaften aufweisen, was bei der Suche nach einem geeigneten antimikrobiellen Wirkstoff zur Verwendung in diesen Harz-Zusammensetzungen eine echte Herausforderung darstellt. Eine überzeugende Lösung für eine antimikrobielle Harz-Zusammensetzung, die sich in der Praxis zur Oberflächenveredelung oder bei der Herstellung von Laminaten auch durchgesetzt hätte, ist bislang jedenfalls noch nicht vorgeschlagen worden.

Die unveröffentlichte DE 10 2016 108 549.9 beschreibt eine antimikrobielle Imprägnierharz-Zusammensetzung enthaltend ein Melamin-Formaldehyd-Harz, ein nichtionisches Netzmittel, ein nichtionisches Trennmittel, einen Härter, und Polyhexamethylenguanidin (PHMG) als antimikrobiellen Wirkstoff. Diese antimikrobielle Imprägnierharz- Zusammensetzung weist eine gegenüber bekannten antimikrobiellen Harz-Zusammensetzungen verbesserte Langzeitbeständigkeit auf, da das Polyhexamethylenguanidin zu einem gewissen Anteil kovalent in die Harzmatrix eingebunden wird. Allerdings ist diese Harz-Zusammensetzung bezüglich ihrer Eigenschaften, wie Langzeitstabilität, insbesondere bei Verwendung als Beschichtung auf stark beanspruchten Oberflächen mit erhöhten hygienischen Anforderungen, z.B. im medizinischen Bereich bzw. Krankenhausbereich, die routinemäßig mit starken Desinfektionsmitteln gereinigt werden, noch verbesserungswürdig.

Ausgehend von dem vorstehend erläuterten Stand der Technik und dessen Nachteilen bestand eine Aufgabe der Erfindung darin, eine Harz-Zusammensetzung mit erhöhter Beständigkeit gegen Mikroorganismen bereitzustellen, ohne eine instabile, auswaschbare oder risikobehaftete Substanz verwenden zu müssen und ohne dass es zu einer Beeinträchtigung der mechanischen und optischen Eigenschaften der aus der Harz-Zusammensetzung erhaltenen Oberflächen kommt. Ein weiterer Aspekt der der Erfindung zugrunde liegenden Aufgabe bestand darin, umweltfreundliche und gesundheitlich unbedenkliche Produkte bereitzustellen, deren Oberflächen sich durch eine langanhaltende Beständigkeit gegen Mikroorganismen auszeichnen.

Ferner war es eine Aufgabe der Erfindung, eine Harz-Zusammensetzung aufzuzeigen, durch die ein ausreichender Schutz vor Mikroorganismen mit geringem Aufwand, insbesondere durch geringen Eintrag von Fremdstoffen in die Harz-Zusammensetzung und/oder die daraus erhältlichen Oberflächen und geringer bis keiner Erhöhung der Herstellungskosten erreicht wird. Gleichzeitig sollte gewährleistet werden, dass die hohen Anforderungen an gattungsgemäße Harz-Zusammensetzungen hinsichtlich der mechanischen Beständigkeit sowie optischen Eigenschaften der daraus erhältlichen Oberflächen weiterhin erfüllt werden.

Diese Aufgabe wird erfindungsgemäß durch die Harz-Zusammensetzung nach Anspruch 1, das Imprägnat nach Anspruch 10, das Laminat nach Anspruch 13, das Verfahren nach Anspruch 15 sowie die Verwendung gemäß Anspruch 17 gelöst. Besondere Ausgestaltungen der Erfindung sind in den abhängigen Ansprüchen wiedergegeben.

Die erfindungsgemäße Harz-Zusammensetzung enthält ein an den primären Amingruppen kovalent modifiziertes Polyhexamethylenguanidin (PHMG) und/oder ein an den primären Amingruppen kovalent modifiziertes Polyhexamethylenbiguanid (PHMB), wobei die Harz-Zusammensetzung eine Imprägnierharz-Zusammensetzung ist und ferner ein Melamin-Formaldehyd-Harz, ein nichtionisches und/oder kationisches Netzmittel, ein nichtionisches Trennmittel und einen Härter umfasst.

Die Wörter "ein", "eine" oder "einen", wie hier oder an anderer Stelle verwendet, sind im Sinne von "mindestens ein", "mindestens eine" oder "mindestens einen" zu verstehen.

Überraschenderweise wurde gefunden, dass die erfindungsgemäße Harz-Zusammensetzung die aus dem Stand der Technik bekannten Probleme überwindet. Aus der erfindungsgemäßen Harz-Zusammensetzung erhältliche Oberflächen wirken langanhaltend antimikrobiell und genügen gleichzeitig den strengen Anforderungen an die mechanische Festigkeit sowie die Transparenz und das optischen Erscheinungsbild, obwohl die Harz-Zusammensetzung ein an den primären Amingruppen kovalent modifiziertes Polyhexamethylenguanidin (PHMG) und/oder ein an den primären Amingruppen modifiziertes Polyhexamethylenbiguanid (PHMB) enthält.

Wenn hier oder an einer anderen Stelle von einem "an den primären Amingruppen kovalent modifiziertes Polyhexamethylenguanidin (PHMG) und/oder an den primären Amingruppen modifiziertes Polyhexamethylenbiguanid (PHMB)" gesprochen wird, dann sind damit Stoffe gemeint, die an Stelle der im Polyhexamethylenguanidin (PHMG) bzw. Polyhexamethylenbiguanid (PHMB) enthaltenen primären Amingruppen eine andere Atomgruppe besitzen. Ein Salz von Polyhexamethylenguanidin (PHMG) bzw. Polyhexamethylenbiguanid (PHMB) ist damit kein an den primären Amingruppen kovalent modifiziertes Polyhexamethylenguanidin (PHMG) und/oder an den primären Amingruppen modifiziertes Polyhexamethylenbiguanid (PHMB), wie hier verwendet. Dies schließt aber nicht aus, dass ein an den primären Amingruppen kovalent modifiziertes Polyhexamethylenguanidin (PHMG) und/oder ein an den primären Amingruppen modifiziertes Polyhexamethylenbiguanid (PHMB) selbst ein Salz sein kann.

Wie eingangs erläutert wurden im Vorfeld der Erfindung in Versuchen unterschiedlichste Harz-Zusammensetzungen hergestellt und hinsichtlich ihrer mechanischen, optischen und auch antimikrobiellen Eigenschaften untersucht. Als antimikrobielle Substanzen wurden hierbei unter anderem Molybdän-Verbindungen, Silber-Ionen sowie Zinkoxid in reines Melamin-Formaldehydharz mit den üblichen Additiven, wie Härter sowie ionischen Netz- und Trennmittel, eingebracht. Dennoch zeigten diese Additive keine zufriedenstellenden Ergebnisse. Besonders die vorbezeichneten Metallionen wie Zink, Silber und Molybdän erfuhren durch die Bildung unlöslicher Verbindungen eine irreversible Inhibierung der antimikrobiellen Wirkung. Weitere Wirkstoffe setzten zur Entfaltung der antimikrobiellen Wirkung bzw. der Verarbeitung die Präsenz ausreichender Mengen von Wasser voraus, welches unter üblichen Einsatzbedingungen nicht vorhanden ist. Somit zeigte sich eine Wirkung dieser Biozide alleinig unter Prüfbedingungen, wie sie beispielsweise unter Anwendung der japanischen Normprüfung JIS Z 2801 vorliegen.

Auch das alleinige Untermischen polymerer Guanidin bzw. Biguanidin-Derivate, wie z.B. Polyhexamethylenguanidin (PHMG) oder Polyhexamethylenbiguanid (PHMB), zu einer Imprägnierharz-Zusammensetzung, die als Harz Melamin-Formaldehydharz und die üblichen Härter sowie ionischen Netz- und Trennmittel enthielt, führte nicht zu den gewünschten Ergebnissen. Diese Harz-Zusammensetzungen zeigten nach Aushärtung nur eine geringe bis gar keine antimikrobielle Aktivität. Weiterhin wurden auch die strengen Anforderungen an die mechanische Festigkeit und optische Erscheinung nicht erfüllt.

Die Anwendung eines an den primären Amingruppen kovalent modifizierten Polyhexamethylenguanidins (PHMG) und/oder eines an den primären Amingruppen kovalent modifizierten Polyhexamethylenbiguanids (PHMB) im Bereich von gattungsgemäßen Harz-Zusammensetzungen mit den oben beschrieben hohen mechanischen und optischen Anforderungen ist bisher nicht bekannt. Lediglich im Bereich der zu Harzen gänzlich unterschiedlichen Melamin-Hartplastik Anwendungen sowie den zu Melamin-Formaldehyd-Harzen entfernt verwandten Phenolharzen wurde vereinzelt die Beimischung, jedoch nicht die Einpolymerisation von fester, polymerer Guanidin-Verbindung enthaltenden Pulvern vorgeschlagen. Diese polymere Guanidin-Verbindung ist jedoch kein an den primären Amingruppen kovalent modifiziertes Polyhexamethylenguanidin (PHMG) und/oder an den primären Amingruppen kovalent modifiziertes Polyhexamethylenbiguanid (PHMB) im Sinne der Erfindung.

So beschreibt die WO 2010/106002 A1 ein mikrobiozid wirkendes pulverförmiges Polymergemisch, welches ein erstes Polymer als Matrix aufweist, in welche ein zweites Polymer eingebracht ist, wobei das zweite Polymer ein polymeres Guanidin- oder Biguanidinderivat ist. Die WO 2010/106002 A1 schlägt als erstes Polymer eine Vielzahl von Polymeren vor, v.a. Thermoplaste, die in den Beispielen als fertige Kunststoffe aufgeschmolzen und mit der polymeren Guanidin-Verbindung in Extrudern vermengt werden. Lediglich in dem die Seiten 3 und 4 überbrückenden Absatz werden Phenoplaste und Aminoplaste, wie Melamin-Harze und Harnstoff-Harze, als mögliche Matrixpolymere genannt. Konkret wird jedoch nur die Einarbeitung des polymeren Guanidins in ein Phenolharz-Vorkondensat ("Novolak") beschrieben. Dem Fachmann ist klar, dass es hierbei nicht zu einem Einpolymerisieren der polymeren Guanidin-Verbindung in die Phenolharz-Matrix kommt.

Dem Fachmann ist beispielsweise von Mischungen aus Phenoplasten und Melamin bekannt, dass es bei Phenoplasten nicht zu einer Einpolymerisation von primären Aminogruppen-haltigen Komponenten, wie sie im Melamin oder auch in den polymeren Guanidin-Derivaten der WO 2010/106002 A1 enthalten sind, kommt. Es ist daher davon auszugehen, dass bei der in WO 2010/106002 A1 beschriebenen Ausführungsform Phenoplast und polymeres Guanidin-Derivat nebeneinander in einfacher Mischung als sogenannter Polymerblend, nicht jedoch als Polymerisat ohne weiteres Harz oder als Co-Polymerisat, vorliegen. Als Anwendung schlägt die WO 2010/106002 A1 vor, dieses Pulver beispielsweise Dispersionsfarben zuzumischen oder als Füllstoff (sogenannter Zuschlagstoff) in der Papierindustrie einzusetzen. Eine Anwendung als Lack- oder Imprägnierharz oder in der Holzwerkstoff-, Laminat- oder Imprägnat-Herstellung wird nicht vorgeschlagen.

Die WO 2010/106002 A1 verweist explizit darauf, dass Bestandteile, die in Beschichtungsmaterialen, Farben und Lacken vorhanden sind zu einer Abschwächung bis Inaktivierung der antimikrobiellen Wirkung der polymeren Guanidine führen können, weshalb die Mischung des polymeren Guanidins mit dem Matrixpolymer, wie beispielsweise einem Thermoplast oder Phenoplast, und dessen Einsatz als Pulver eine wichtige Voraussetzung für die Weiterverarbeitung, das Einsatzgebiet und den Erhalt der antimikrobiellen Eigenschaften seien. Die Schrift zeigt so zwar eine Möglichkeit auf, die Inkompatibilität der polymeren Guanidin-Verbindungen mit Beschichtungsmaterialen, Farben und Lacken zu reduzieren, dennoch sind derartige Polymerpulver zur Einarbeitung in ein gattungsgemäßes Harz, welches den oben dargelegten strengen Anforderungen genügen soll, völlig ungeeignet.

Bei Eintrag eines solchen Polymerpulvers sind Beeinträchtigungen der mechanischen Eigenschaften und vor allem eine inakzeptable Trübung des Harzes zu erwarten. Daneben führt die Beimischung eines derartigen Polymerpulvers auch zu einer Störung der Kondensation bzw. Aushärtung des Harzes, so dass eine deutlich "weichere" und damit eine nicht ausreichend widerstandsfähige Beschichtung erhalten werden würde.

Vor dem Hintergrund der WO 2010/106002 A1 und dem allgemeinen Fachwissen zu polymeren Guanidin-Verbindungen war es überraschend, dass in der erfindungsgemäßen Harz-Zusammensetzung ein an den primären Amingruppen kovalent modifiziertes Polyhexamethylenguanidin (PHMG) und/oder ein an den primären Amingruppen kovalent modifiziertes Polyhexamethylenbiguanid (PHMB) auch ohne das gemäß WO 2010/106002 A1 erforderliche Matrixpolymer zu hervorragenden Ergebnissen führt.

Polymere Guanidin-Verbindungen, insbesondere Polyhexamethylenguanidin (PHMG), und oder polymere Biguanidin-Verbindungen, insbesondere Polyhexamethylenbiguanid (PHMB), sind bislang hauptsächlich als desinfizierend wirkende Zusatzkomponenten zur Desinfektion der Haut- oder Schleimhaut-, in der Wundantiseptik, in Händedesinfektionsmitteln, zur reinen Oberflächendesinfektion, beispielsweise durch Auftragen und Abwischen einer Guanidin-oder Biguanidin-haltigen Lösung, im medizinischem Bereich zur Bekämpfung von Bakterien oder zur Wasserdesinfektion, beispielsweise in Schwimmbädern, in Erscheinung getreten.

In der Desinfektionsmittel-Liste des VAH (mhp Verlag 2015), welche alle von der Desinfektionsmittel-Kommission zertifizierten Präparate enthält, ist zu Guanidinderivaten folgendes ausgeführt *"Guanidine werden aufgrund ihres schmalen Wirkungsspektrums [...] bei günstigen humantoxikologischen Eigenschaften bevorzugt für die Schleimhaut- und Wundantiseptik eingesetzt. Aufgrund ihrer Remanenzwirkung sind sie als Zusatzkomponenten in Hautantiseptika und Händedesinfektionsmitteln anzutreffen, oder sie werden in Kombination mit anderen Wirkstoffen eingesetzt."*

Vor diesem Hintergrund sowie den oben beschriebenen Problematiken war es für den Fachmann nicht naheliegend, dass ein an den primären Amingruppen kovalent modifiziertes Polyhexamethylenguanidin (PHMG) und/oder ein an den primären Amingruppen kovalent modifiziertes Polyhexamethylenbiguanid (PHMB) problemlos in eine Harz-Zusammensetzung eingearbeitet werden kann ohne deren mechanische Eigenschaften und Vernetzungsfähigkeit zu stören und gleichzeitig eine ausreichende antimikrobielle Wirkung gegenüber Mikroorganismen entfaltet. Insbesondere gilt dies für Mikroorganismen, die typischerweise cellulose- oder holzenthaltende Produkte (Laminate oder Imprägnate in Fußbodenbelägen, Oberflächen oder Möbeln) befallen. Die zu bekämpfenden Mikroorganismen in der Haut- oder Wasserdesinfektion unterscheiden sich grundlegend in ihrem Spektrum von denen, die typischerweise cellulose- oder holzenthaltende Produkte befallen. Bei der Humananwendung und der medizinischen Oberflächendesinfektion stehen vor allem Bakterien im Vordergrund. Bei den Mikroorganismen, die Holz bzw. cellulose- oder holzenthaltende Produkte (Laminate oder Imprägnate in Fußbodenbelägen, Oberflächen oder Möbeln) typischerweise befallen, handelt es sich vor allem um Pilze.

Überdies war es für den Fachmann nicht absehbar, dass ein an den primären Amingruppen kovalent modifiziertes Polyhexamethylenguanidin (PHMG) und/oder ein an den primären Amingruppen modifiziertes Polyhexamethylenbiguanid (PHMB) mit den in der Herstellung und bei der Verwendung von Harz-Zusammensetzungen, bei der Laminat- und/oder Imprägnatherstellung herrschenden Prozessbedingungen sowie den darin eingesetzten Chemikalien kompatibel sein würden. Letztere Problematik wurde oben bereits diskutiert. In praktischen Versuchen zeigte das erfindungsgemäß eingesetzte an den primären Amingruppen kovalent modifizierte Polyhexamethylenguanidin (PHMG) und/oder an den primären Amingruppen kovalent modifizierte Polyhexamethylenbiguanid (PHMB) überraschenderweise eine ausreichende Temperaturbeständigkeit gegenüber den in der Herstellung und bei der Verwendung von Harz-Zusammensetzungen, bei der Laminat- und/oder Imprägnatherstellung herrschenden Lagerbedingungen, Trocknungs- und/oder Presstemperaturen.

Der erfindungsgemäße Einsatz eines an den primären Amingruppen kovalent modifizierten Polyhexamethylenguanidins (PHMG) und/oder eines an den primären Amingruppen kovalent modifizierten Polyhexamethylenbiguanids (PHMB) hat ferner auch den Vorteil, dass dieses eine sehr geringe Toxizität aufweist und sich in praktischen Versuchen auch keine Ausbildung von Resistenzen gegenüber den Mikroorganismen gezeigt hat. Weiterhin kann durch den Einsatz eines an den primären Amingruppen kovalent modifizierten Polyhexamethylenguanidins (PHMG) und/oder eines an den primären Amingruppen kovalent modifizierten Polyhexamethylenbiguanids (PHMB) ein umweltfreundliches und/oder unbedenkliches Produkt erhalten werden, da dieses kein Schwermetall enthält.

Ein weiterer Vorteil der erfindungsgemäßen Harz-Zusammensetzung ist, dass sie auf einfache und kostengünstige Weise hergestellt werden kann. Ferner zeigt diese eine gute Lagerstabilität. Dies gilt auch für die aus der erfindungsgemäßen Harz-Zusammensetzung erhältlichen Verarbeitungsprodukte.

Unter dem Begriff "Verarbeitungsprodukte", wie hier verwendet, werden insbesondere die weiter unten beschriebene Harzschicht sowie das erfindungsgemäße Laminat und/oder Imprägnat verstanden, welche die erfindungsgemäße Harz-Zusammensetzung in teil- oder auspolymerisierter Form enthalten bzw. unter Einsatz dieser hergestellt wurden. Diese Verarbeitungsprodukte enthalten vorzugsweise die folgenden Komponenten:
i) ein Polymerisat aus einem an den primären Amingruppen kovalent modifizierten Polyhexamethylenguanidin (PHMG) und/oder einem an den primären Amingruppen kovalent modifizierten Polyhexamethylenbiguanid (PHMB) und einen Härter, insbesondere ein mehrfachfunktionales Amin, besonders bevorzugt Triethylentetraamin; oder
ii) ein Co-Polymerisat aus an den primären Amingruppen kovalent modifizierten Polyhexamethylenguanidin (PHMG) und/oder einem an den primären Amingruppen kovalent modifizierten Polyhexamethylenbiguanid (PHMB) und einem weiteren Harz, wobei das weitere Harz ein Melamin-Formaldehyd-Harz oder ein strahlenhärtendes Acrylatharz ist.

Unter einem "mehrfachfunktionalen Amin", wie hier verwendet, wird ein Molekül verstanden welches mindestens zwei primäre Amingruppen besitzt.

Wenn das weitere Harz in Komponente ii) ein strahlenhärtendes Acrylatharz ist, enthält das Verarbeitungsprodukt zusätzlich einen Photoinitiator.

Wenn das weitere Harz in Komponente ii) ein Melamin-Formaldehyd-Harz ist, enthält das Verarbeitungsprodukt zusätzlich ein nichtionisches und/oder kationisches Netzmittel, ein nichtionisches Trennmittel, und einen Härter.

Wenn hier oder an anderer Stelle von "Polymerisation", "polymerisiert" oder "Polymerisat" die Rede ist, dann ist damit Polymerisation als Oberbegriff für beliebige Polymerbildungsreaktionen, wie Polykondensation, Polyaddition sowie Kettenpolymerisation, gemeint.

Wenn hier oder an einer anderen Stelle von "Kondensation", "kondensiert" oder "Kondensat" die Rede ist, dann ist damit Kondensation, wie üblicherweise im Fachgebiet der Chemie verwendet, gemeint. Unter Kondensationsreaktion wird in der Chemie eine Reaktion verstanden, bei der sich mindestens zwei Moleküle unter Abspaltung von Wasser - alternativ auch Ammoniak, Kohlenstoffdioxid, Chlorwasserstoff, ein Alkanol oder ein anderer niedermolekularer Stoff - kovalent miteinander verbinden. Die "Kondensation" im Zusammenhang mit Aminoplast-Harzen wird von dem in der holz-oder papierverarbeitenden Industrie tätigen Fachmann auch als sogenanntes "Aushärten" bezeichnet. Die Kondensation bzw. das Aushärten kann stufenweise bzw. teilweise erfolgen. Die Kondensation bzw. das Aushärten des Aminoplastharzes erfolgt typischerweise unter Einfluss eines Härters, erhöhter Temperatur und/oder Druck. Beispiele hierfür sind Trocknungsprozesse und/oder das Verpressen zu einem Laminat. Durch Anwesenheit und/oder Freisetzung eines Härters kann auch ein weiteres Kondensieren bzw. Aushärten des Harzes bei Lagerung oder bei der späteren Anwendung oder Fertigstellung des Endprodukts erfolgen.

Die Lagerstabilität ist vor allem bei der Imprägnatherstellung von entscheidender Bedeutung. Typischerweise werden Imprägnate separat hergestellt, aufgerollt oder zu Bögen geschnitten und bis zu zwei Monate gelagert, bevor diese verarbeitet werden. Praktische Versuche haben ergeben, dass auch nach längerer Lagerzeit die anvisierten antimikrobiellen, mechanischen und optischen Eigenschaften der erfindungsgemäßen Harz-Zusammensetzung erhalten bleiben und die aufgetragene Harz-Zusammensetzung auch weiterhin gute Verklebungseigenschaften in der Weiterverarbeitung aufwies.

Die Harz-Zusammensetzung ist üblicherweise flüssig, liegt also als Flüssigkeit vor. Diese kann feste Bestandteile in Form beispielsweise einer Suspension enthalten. Wird die Harzzusammensetzung als Lackharz-Zusammensetzung eingesetzt, so ist diese bevorzugt lösungsmittelfrei. Vorzugsweise ist die Harz-Zusammensetzung wenn sie als Imprägnierharz-Zusammensetzung eingesetzt wird auf wässriger Basis. Die Harz-Zusammensetzung kann als Lösung oder Suspension eingesetzt werden. Bevorzugt wird die Harz-Zusammensetzung in Form einer Imprägnierharz-Zusammensetzung als wässrige Lösung eingesetzt. In dieser Form lässt sich die Harz-Zusammensetzung ohne große Anpassungen in die üblichen Prozessabläufe und Bedingungen bei der Imprägnat-und/oder Laminatherstellung einbinden und verarbeiten. Gemäß einer Ausführungsform, in der die Harz-Zusammensetzung eine Imprägnierharz-Zusammensetzung ist, liegen die Komponenten in der erfindungsgemäßen Harz-Zusammensetzung in wässriger Lösung vor. Die erfindungsgemäße Harz-Zusammensetzung kann neben diesen Komponenten auch weitere nicht-lösliche Bestandteile enthalten. Gemäß einer alternativen Ausführungsform, in der die Harz-Zusammensetzung eine Lackharz-Zusammensetzung ist, liegen die Komponenten in der erfindungsgemäßen Harz-Zusammensetzung ohne Lösungsmittel vor, d.h. die Lackharz-Zusammensetzung ist lösungsmittelfrei.

In weiteren Versuchen zu der Harz-Zusammensetzung sowie ihrer Verarbeitungsprodukte, zeichneten sich diese durch ihre gute UV-Beständigkeit aus. Dies lässt auf eine gute Beständigkeit der Harz-Zusammensetzung sowie ihrer Verarbeitungsprodukte schließen.

Weiterhin zeigen die erfindungsgemäße Harz-Zusammensetzung sowie die daraus erhältlichen Verarbeitungsprodukte eine anhaltende antimikrobielle Wirkung.

"Antimikrobiell", wie hier verwendet, bedeutet, dass die Gesamtanzahl der Mikroorganismen auf der betreffenden Oberfläche über einen gewissen Zeitraum konstant oder abnehmend ist. Unter antimikrobiell wird insbesondere auch bakterizid, bakteriostatisch, fungizid und/oder fungistatisch verstanden. "Mikroorganismen" sind typischerweise mikroskopisch kleine Lebewesen (Organismen), die als Einzelwesen nicht mit bloßem Auge erkennbar sind. Sie bilden im System der Lebewesen keine einheitliche Gruppe. Zu den Mikroorganismen zählen Bakterien, Pilze, mikroskopische Algen sowie Protozoen (z. B. Pantoffeltierchen und der Malaria-Erreger Plasmodium) sowie Viren.

Wenn hier oder an anderer Stelle von "Bakterien" die Rede ist, dann ist damit das gesamte Reich der "Bacteria" gemeint. Hierzu gehören beispielsweise Staphylokokken, Escherichia coli, Pseudomonas aeruginosa, Acinetobacter, Enterokokken, andere Erreger nosokomialer Infektionen und/oder holzzerstörende Bakterien.

Wenn hier oder an anderer Stelle von "Pilz" oder "Pilzbefall" die Rede ist, dann ist mit "Pilz" die breite Definition für das Reich der "Fungi" aus der biologischen Taxonomie gemeint. Dies schließt neben Einzellern wie Bäckerhefe auch Vielzeller wie Schimmelpilze oder Ständerpilze mit ein. Unter "Pilz" sind hier vor allem auch holzzerstörende und/oder holzverfärbende Pilze bzw. der Befall durch diese gemeint. Diese holzzerstörenden und/oder holzverfärbenden Pilze schädigen das Holz typischerweise durch beispielsweise Braunfäule, Weißfäule, Moderfäule, Schimmel, Bläue oder Rotstreifigkeit. Gemäß einer Ausführungsform handelt es sich bei den Pilzen um Schimmelpilze und/oder Bläuepilze. Die Pilze können weiterhin ausgewählt sein aus den Basomyceten, Ascomyceten und Deutomyceten.

Unter "Erhöhung der Beständigkeit gegenüber Mikroorganismen" wie hier verwendet, ist eine Verringerung des Mikroorganismenbefalls im Vergleich zu einer nichtantimikrobiell wirkenden Referenz gemeint. Diese Beständigkeit von Oberflächen gegenüber mikrobiellem Befall kann beispielsweise in Anlehnung an die Norm EN ISO 846:1997 "Bestimmung der Einwirkung von Mikroorganismen auf Kunststoffe" ermittelt werden. Im Rahmen der Versuche wurde die antimikrobielle Wirksamkeit mittels der Testkeime *S*. *aureus* und *E. coli* überprüft und eine Keimreduktionen bis zu 5 log-Stufen innerhalb von 3 Stunden erreicht.

Überraschenderweise zeigen sich trotz der guten Wasserlöslichkeit des antimikrobiell wirkenden an den primären Amingruppen kovalent modifizierten Polyhexamethylenguanidins (PHMG) und/oder an den primären Amingruppen kovalent modifizierten Polyhexamethylenbiguanids (PHMB) keine Auswaschproblematik und damit einhergehende Wirkverluste. Das an den primären Amingruppen kovalent modifizierte Polyhexamethylenguanidin (PHMG) und/oder an den primären Amingruppen kovalent modifizierte Polyhexamethylenbiguanid (PHMB) scheint daher in der Harz-Zusammensetzung bzw. in den späteren Verarbeitungsprodukten ausreichend fixiert zu sein. Ohne an eine bestimmte wissenschaftliche Theorie gebunden sein zu wollen, rührt diese Fixierung vermutlich daher, dass das an den primären Amingruppen kovalent modifizierte Polyhexamethylenguanidin (PHMG) und/oder das an den primären Amingruppen kovalent modifizierte Polyhexamethylenbiguanid (PHMB) polymerisiert, wodurch ein Polymerisat aus an den primären Amingruppen kovalent modifiziertem Polyhexamethylenguanidin (PHMG) und/oder an den primären Amingruppen kovalent modifiziertem Polyhexamethylenbiguanid (PHMB) erhalten wird.

Die Harz-Zusammensetzung kann neben dem an den primären Amingruppen kovalent modifizierten Polyhexamethylenguanidin (PHMG) und/oder das an den primären Amingruppen kovalent modifizierten Polyhexamethylenbiguanid (PHMB) auch ein weiteres Harz, bevorzugt Melamin-Formaldehyd-Harz oder strahlenhärtbares Acrylatharz, enthalten. In diesem Fall kommt es ebenfalls nicht zu der oben erwähnten Auswaschproblematik. Dies rührt vermutlich daher dass das an den primären Amingruppen kovalent modifizierte Polyhexamethylenguanidin (PHMG) und/oder das an den primären Amingruppen kovalent modifizierte Polyhexamethylenbiguanid (PHMB) mit dem Harz co-polymerisiert, wodurch ein Co-Polymerisat aus an den primären Amingruppen kovalent modifiziertem Polyhexamethylenguanidin (PHMG) und/oder an den primären Amingruppen kovalent modifiziertem Polyhexamethylenbiguanid (PHMB) erhalten wird.

Da die ganz oder teilweise ausgehärtete bzw. polymerisierte Harz-Zusammensetzung in den Verarbeitungsprodukten die gewünschten mechanischen und optischen Eigenschaften aufweist auch wenn ein weiteres Harz enthalten ist, ist davon auszugehen, dass sich das Co-Polymerisat ohne Erzeugung von Störstellen problemlos weiter vernetzen kann. Es erfolgt somit eine kovalente Einbindung eines an den primären Amingruppen kovalent modifizierten Polyhexamethylenguanidins (PHMG) und/oder eines an den primären Amingruppen kovalent modifizierten Polyhexamethylenbiguanids (PHMB) in das weitere Harz.

Die hervorragenden mechanischen und optischen Eigenschaften der erfindungsgemäßen Harz-Zusammensetzung und den daraus erhältlichen Verarbeitungsprodukten war, insbesondere für das Vorliegen eines weiteren Harzes in der Harz-Zusammensetzung, überraschend, da - wie eingangs erläutert - eine Co-Polymerisation, beispielsweise bei Melamin-Formaldehyd-Harzen selbst mit dem strukturverwandten Harnstoff, in der Vergangenheit zu inhomogenen Harzen führte, die den hohen Anforderungen an Harze, insbesondere Imprägnier- und Lackharze, nicht genügten. Daher war es umso überraschender, dass an den primären Amingruppen kovalent modifiziertes Polyhexamethylenguanidin (PHMG) und/oder an den primären Amingruppen kovalent modifiziertes Polyhexamethylenbiguanid (PHMB), die auch eine Teil-Harnstoff-Struktur aufweisen, in Melamin-Formaldehyd-Harzen keine "Störstellen" bilden, die einer homogenen Kondensation und damit Aushärtung bzw. Vernetzung des Harzes entgegenstehen. Der Fachmann hätte vielmehr mit einer Verschlechterung der Eigenschaften des Harzes bzw. der Harz-Zusammensetzung gerechnet. Vor dem Hintergrund der eingangs erläuterten schlechten Erfahrung selbst mit Melamin-Formaldehyd-Harnstoff Co-Kondensaten waren die guten mechanischen und optischen Eigenschaften der erfindungsgemäß erhältlichen Co-Polymerisate aus an den primären Amingruppen kovalent modifiziertem Polyhexamethylenguanidin (PHMG) und/oder an den primären Amingruppen kovalent modifiziertem Polyhexamethylenbiguanid (PHMB) und einem weiteren Harz überraschend.

Wenn hier oder an anderer Stelle von "Harz-Zusammensetzung" die Rede ist, dann ist damit eine Zusammensetzung gemeint, die das an den primären Amingruppen kovalent modifizierte Polyhexamethylenguanidin (PHMG) und/oder das an den primären Amingruppen kovalent modifizierte Polyhexamethylenbiguanid (PHMB) enthält. Das an den primären Amingruppen kovalent modifizierte Polyhexamethylenguanidin (PHMG) und/oder das an den primären Amingruppen kovalent modifizierte Polyhexamethylenbiguanid (PHMB) ist selbst ein Harz und kann daher durch Aushärtung eine Harzbeschichtung bilden. Die erfindungsgemäße Harz-Zusammensetzung enthält daher nicht notwendigerweise ein weiteres Harz als Bestandteil.

Die erfindungsgemäße Harz-Zusammensetzung kann einerseits eine Imprägnierharz-Zusammensetzung und andererseits als Lackharz-Zusammensetzung sein, wobei vorzugsweise ein weiteres Harz in der Harz-Zusammensetzung enthalten ist. Imprägnierharz-Zusammensetzungen und Lackharz-Zusammensetzungen können unterschiedliche Komponenten enthalten und unterscheiden sich für den Fachmann ferner in der Art Ihres Auftrags bzw. ihrer Verwendung. Während "Lackharz-Zusammensetzungen", die für die Veredelung von lackierbaren Oberflächen jeglicher Art, wie z.B. Wand-, Fußboden-, Decken- und Möbeloberflächen verwendet werden und üblicherweise als oberste Schicht auf der jeweiligen lackierbaren Oberfläche vorliegen, ist eine "Imprägnierharz-Zusammensetzung", wie hier verwendet, gleichbedeutend mit dem vom Fachmann ebenfalls verwendeten Begriff "Tränkharz-Zusammensetzung" und kann von dem Trägermaterial ganz oder teilweise aufgesogen und/oder in Form einer Schicht auf oder in diesem vorliegen. Zur Unterscheidung der Begriffe Lackharz und Imprägnierharz gilt das in der Einleitung oben Gesagte.

Die erfindungsgemäße Harz-Zusammensetzung enthält ein an den primären Amingruppen kovalent modifiziertes Polyhexamethylenguanidin (PHMG) und/oder ein an den primären Amingruppen kovalent modifiziertes Polyhexamethylenbiguanid (PHMB).

Polyhexamethylenguanidin (PHMG) und Polyhexamethylenbiguanid (PHMB) sind polymere Guanidin-Verbindungen, insbesondere ist PHMG eine polymere Mono-Guanidin-Verbindung, und weist als Strukturelement nur Mono-Guanidin-Gruppen auf, welche nachfolgend beispielhaft dargestellt ist.

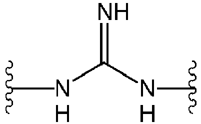

PHMB ist eine polymere Biguanidin-Verbindung und weist als Strukturelement Biguanidin-Gruppen auf.

Guanidine sind Iminoharnstoffe bzw. Carbamidine. Sie besitzen eine Harnstoff-Teilstruktur. Guanidine bzw. polymere Guanidin-Verbindungen sind dem Fachmann allgemein bekannt. Die Eigenschaften und Darstellung von Guanidinen bzw. polymeren Guanidin-Verbindungen sind beispielsweis in "Ullmanns Enzyklopädie der technischen Chemie -Band 12", Verlag Chemie, GmbH, 1976, Seiten 411-419 beschrieben. Die Darstellung von Polyhexamethylenguanidin (PHMG) ist beispielsweise in der WO 1999/054291 A1 beschrieben.

Die in Polyhexamethylenguanidin (PHMG) enthaltenen Guanidingruppen und die in Polyhexamethylenbiguanid (PHMB) enthaltene Biguanidingruppen können auch in geladener Form vorliegen, insbesondere als Kationen in einem Salz mit Gegenanion. Polyhexamethylenguanidin (PHMG) weist die Strukturformel (I) auf.

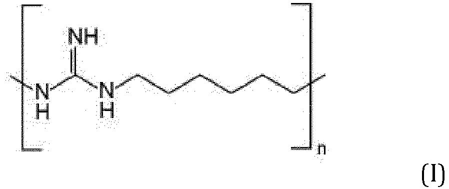

PHMG ist kommerziell erhältlich. PHMG ist beispielsweise unter der CAS-Nr. 57028-96-3 (PHMG-Hydrochlorid) erhältlich.

Polyhexamethylenbiguanidin (PHMB) weist die Strukturformel (II) auf.

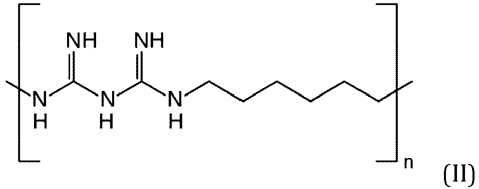

PHMB ist kommerziell erhältlich. PHMB ist beispielsweise unter der CAS-Nr. 32289-58-0 (PHMB-Hydrochlorid) erhältlich.

Bevorzugt ist das an den primären Amingruppen kovalent modifizierte Polyhexamethylenguanidin (PHMG) ein Additionsprodukt aus Polyhexamethylenguanidin (PHMG) und einem Epoxidharz oder einem oligomeren Diisocyanat und das an den primären Amingruppen kovalent modifizierte Polyhexamethylenbiguanid (PHMB) ein Additionsprodukt aus Polyhexamethylenbiguanid (PHMB) und einem Epoxidharz oder einem oligomeren Diisocyanat. "Additionsprodukt" bedeutet dabei, dass das Produkt, in diesem Fall das an den primären Amingruppen kovalent modifizierte Polyhexamethylenguanidin (PHMG) und/oder das an den primären Amingruppen kovalent modifizierte Polyhexamethylenbiguanid (PHMB), aus einer Additionsreaktion des PHMG bzw. PHMB mit dem Epoxidharz oder dem oligomeren Diisocyanat entsteht. Solche Additionsprodukte aus an den primären Amingruppen kovalent modifiziertem Polyhexamethylenguanidin (PHMG) und einem Epoxidharz oder einem oligomeren Diisocyanat und an den primären Amingruppen kovalent modifiziertem Polyhexamethylenbiguanid (PHMB) und einem Epoxidharz oder einem oligomeren Diisocyanat sind selbst Harze, d.h. sie können unter Zugabe eines Härters, vorzugsweise eines mehrfachfunktionalen Amins, insbesondere Triethylentetraamin, polymerisieren bzw. aushärten und Harzbeschichtungen bilden.

Gemäß einer bevorzugten Ausführungsform der Erfindung ist das Epoxidharz ausgewählt ist aus der Gruppe, bestehend aus Bisphenol-basierten Epoxidharzen, Novolak- Epoxidharzen, aliphatischen glycidyl-basierten Epoxidharzen und deren Mischungen. Besonders bevorzugt ist das Epoxidharz ein Bisphenol-basiertes Epoxidharz.

Gemäß einer weiteren bevorzugten Ausführungsform der Erfindung ist das oligomere Diisocyanat ausgewählt aus der Gruppe, bestehend aus oligomerem Toluoldiisocyanat, oligomerem Diphenylmethandiisocyanat (MDI), oligomerem Isophorondiisocyanat (IPDI), oligomerem 4,4- Dicyclohexylmethandiisocyanat (H12MDI) und oligomerem Pentamethylen-Diisocyanat (PDI) und deren Mischungen.

Wenn hier oder an anderer Stelle von einem an den primären Amingruppen kovalent modifizierten Polyhexamethylenguanidin (PHMG) und/oder an den primären Amingruppen kovalent modifizierten Polyhexamethylenbiguanid (PHMB) die Rede ist, dann sind damit auch jegliche Salze davon gemeint. Besonders vorteilhaft ist, wenn das an den primären Amingruppen kovalent modifizierte Polyhexamethylenguanidin (PHMG) und/oder das an den primären Amingruppen kovalent modifizierte Polyhexamethylenbiguanid (PHMB) in einer im entsprechenden Lösungsmittel löslichen Form vorliegt, z.B. als Salz.

Praktische Versuche haben gezeigt, dass dies ein gutes Einarbeiten bzw. Einpolymerisieren des an den primären Amingruppen kovalent modifizierten Polyhexamethylenguanidins (PHMG) und/oder des an den primären Amingruppen kovalent modifizierten Polyhexamethylenbiguanids (PHMB) in die Melamin-Formaldehyd-Harzstruktur eines Imprägnierharzes ermöglicht.

Die Salze des an den primären Amingruppen kovalent modifizierten Polyhexamethylenguanidins (PHMG) und/oder des an den primären Amingruppen kovalent modifizierten Polyhexamethylenbiguanids (PHMB) zeigen ferner eine geringere korrosive Wirkung, sodass die bei der Herstellung der Harz-Zusammensetzung und den daraus erhältlichen Harzbeschichtungen, Laminaten oder Imprägnaten eingesetzten metallischen Geräte geschont werden und sich auch das Anwendungsspektrum verbessert. Unabhängig von der geringeren Korrosivität erhöht sich durch die bevorzugten Ionen die Umweltverträglichkeit des Produktes bzw. seiner Abbauprodukte.

Vorzugsweise liegt das an den primären Amingruppen kovalent modifizierte Polyhexamethylenguanidin (PHMG) und/oder an den primären Amingruppen kovalent modifizierte Polyhexamethylenbiguanid (PHMB) als Salz, insbesondere als wasserlösliches Salz, vor.

Das Salz des an den primären Amingruppen kovalent modifizierten Polyhexamethylenguanidins (PHMG) und/oder des an den primären Amingruppen kovalent modifizierten Polyhexamethylenbiguanids (PHMB) kann ausgewählt sein aus der Gruppe, bestehend aus Hydrochlorid, Chlorid, Hydroxid, Phosphat, Fluorid, Bromid, Jodid, Formiat, Acetat, Diphosphat, Sulfat, Sulfid, Sulfit, Nitrat, Thiocyanat, Thiosulfat, Carbonat, Maleat, Fumarat, Tartrat, Mesylat, Glukonat und Toluolsulfonat, wobei Hydrochlorid, Chlorid, Hydroxid, Phosphat, Hydrogenphosphat, Formiat, Citrat, Diphosphat, Acetat und Carbonat bevorzugt sind. Besonders bevorzugt ist Formiat, Hydrochlorid und/oder Chlorid. Insbesondere bevorzugt ist, wenn als an den primären Amingruppen kovalent modifiziertes Polyhexamethylenguanidin (PHMG) und/oder an den primären Amingruppen kovalent modifiziertes Polyhexamethylenbiguanid (PHMB) das Hydrochlorid eingesetzt wird.

Ein weiterer Vorteil des erfindungsgemäß einsetzbaren an den primären Amingruppen kovalent modifizierten Polyhexamethylenguanidins (PHMG) und/oder an den primären Amingruppen kovalent modifizierten Polyhexamethylenbiguanids (PHMB) ist, dass sich sein Einsatz auf einfache Weise in übliche Verfahren der Imprägnat- und/oder Laminatherstellung integrieren lässt. Die Wasserlöslichkeit des an den primären Amingruppen kovalent modifizierten Polyhexamethylenguanidins (PHMG) und/oder des an den primären Amingruppen kovalent modifizierten Polyhexamethylenbiguanids (PHMB) ist für den Einsatz in einer Imprägnierharz-Zusammensetzung von besonderem Vorteil. Flüssigkeiten allgemein, insbesondere wässrige Lösungen oder Suspensionen lassen sich gut in die üblichen Verfahrensschritte und Anlagen, die bei der Imprägnat-und/oder Laminatherstellung Einsatz finden, integrieren. Es sind keine aufwändigen Zwischenschritte oder Verfahrensunterbrechungen erforderlich. Aufgrund der Wasserlöslichkeit des an den primären Amingruppen kovalent modifizierten Polyhexamethylenguanidins (PHMG) und/oder des an den primären Amingruppen kovalent modifizierten Polyhexamethylenbiguanids (PHMB) bzw. von deren Salzen müssen keine organischen Lösungsmittel in die erfindungsgemäße Harz-Zusammensetzung eingebracht werden. Derartige Lösungsmittel stellen zum einen eine Brandgefahr und zum anderen eine zusätzliche, potentiell gesundheitsschädliche Emissionsquelle dar.

Weiterhin wurde gefunden, dass schon geringe Konzentrationen des erfindungsgemäß einzusetzenden an den primären Amingruppen kovalent modifizierten Polyhexamethylenguanidins (PHMG) und/oder an den primären Amingruppen kovalent modifizierten Polyhexamethylenbiguanids (PHMB) in der Harz-Zusammensetzung ausreichen, um in den daraus erhältlichen Verarbeitungsprodukten, beispielsweise in einer Harzbeschichtung, einem Laminat oder Imprägnat, die gewünschte Beständigkeit gegenüber Mikroorganismen zu erreichen.

In einer bevorzugten Ausführungsform weist die Harz-Zusammensetzung ein an den primären Amingruppen kovalent modifiziertes Polyhexamethylenguanidin (PHMG) und/oder ein an den primären Amingruppen kovalent modifiziertes Polyhexamethylenbiguanid (PHMB) in einer Menge von 0,01 bis 10 Gew.-%, bevorzugt von 1,0 bis 5,0 Gew.-% und insbesondere bevorzugt von 1,0 bis 3,0 Gew.-%, bezogen auf den Festharzanteil des Harzes, auf.

Die erfindungsgemäße Harz-Zusammensetzung enthält ein weiteres Harz.

Als weiteres Harz neben dem an den primären Amingruppen kovalent modifizierten Polyhexamethylenguanidin (PHMG) und/oder dem an den primären Amingruppen kovalent modifizierten Polyhexamethylenbiguanid (PHMB) enthält die erfindungsgemäße Harz-Zusammensetzung Melamin-Formaldehyd-Harze (MF-Harz). Übliche dem Fachmann bekannte Harzewie beispielsweise Phenolharze, AminoplastHarze, wie Harnstoff-Formaldehyd-Harze (UF-Harz),, Epoxidharze, Polyesterharze (UP-Harze), Acrylnitril-Butadien-Styrol-Harze (ABS-Harze), Acrylharze, strahlenhärtende Acrylatharze, Alkydharze, Polyurethanharze, Polyamidharze und Vinylesterharze sind weiterhin geeignet.

Vorteilhafterweise weist das erfindungsgemäß einsetzbare weitere Harz eine Dichte bei 20 °C im Bereich von 0,85 bis 1,7 g/ml, bevorzugt von 1,15 bis 1,45 g/ml und besonders bevorzugt von 1,2 bis 1,4 g/ml, gemessen im Aräometerverfahren auf. Vorteilhaft ist ferner, wenn das erfindungsgemäß einsetzbare weitere Harz eine dynamische Viskosität bei 20°C von 30 bis 300 mPa·s, bevorzugt 70 bis 200 mPa·s, gemessen nach Rotationsviskosimetrie mit Kegel-Platte-Geometrie, aufweist.

Die Harz-Zusammensetzung kann als weiteres Harz ein strahlenhärtendes Acrylatharz und einen Photoinitiator enthalten.

Strahlenhärtende Acrylatharze werden aufgrund ihres eingangs erläuterten Eigenschaftsprofils, d.h. die gleichzeitige Erfüllung mechanischer (z.B. Härte, Abriebfestigkeit, Kratzfestigkeit und/oder Abnutzungsbeständigkeit) und optischer Anforderungen, üblicherweise in Lackharz-Zusammensetzungen verwendet, die der Oberflächenveredelung dienen.

Für die einsetzbaren strahlenhärtenden Acrylatharze gilt das bereits einleitend zu aus dem Stand der Technik strahlenhärtenden Acrylatharzen Gesagte. Bevorzugt wird als strahlenhärtendes Acrylatharz Dipropylen-glycol-diacrylat (DPGDA) und/oder Poly(propylengylcoldiacrylat) (PPGDA) eingesetzt. Weitere einsetzbare strahlenhärtbare Acrylatharze werden beispielsweise von der BASF unter der Marke "Laromer^{®}" vertrieben.

Photoinitiatoren setzen typischerweise unter energiereicher Strahlung, insbesondere UV-Strahlung, Radikale frei, die dazu dienen eine radikalische Polymerisation zu initiieren und beispielsweise das Co-Polymerisat aus an den primären Amingruppen kovalent modifiziertem Polyhexamethylenguanidin (PHMG) und/oder dem an den primären Amingruppen kovalent modifiziertem Polyhexamethylenbiguanid (PHMB) und strahlenhärtendem Acrylatharz zu bilden. Besonders bevorzugt setzt ein solcher Photoinitiator bei UV-Strahlung im Wellenlängenbereich von 180 nm bis 380 nm Radikale frei. Auf diese Weise kann gezielt gesteuert werden, wann der Photoinitiator die Radikale freisetzt. Dies erlaubt eine gute Kontrolle über das Verfahren.

Einsetzbare Photoinitiatoren sind beispielsweise α-Hydroxy-, α-Alkoxy- oder α-Amino-Arylketone oder Acylphosphinoxide und deren Mischungen. Solche Photoinitiatoren sind dem Fachmann grundsätzlich bekannt und werden beispielsweise von der BASF unter der Marke "Irgacure^{®}" vertrieben.
Der Feststoffgehalt des strahlenhärtenden Acrylatharzes liegt vorzugsweise bei bis zu 100 Gew.-%, bezogen auf das Gesamtgewicht des Harzes.

Gemäß einer bevorzugten Ausführungsform enthält die Harz-Zusammensetzung das strahlenhärtende Acrylatharz in einer Menge von größer 65 Gew.-%, insbesondere größer 75 Gew.-%, bezogen auf das Gesamtgewicht der Harz-Zusammensetzung.

Die erfindungsgemäße Harz-Zusammensetzung ist eine Imprägnierharz-Zusammensetzung und enthält als weiteres Harz ein Melamin-Formaldehyd-Harz, ein nichtionisches und/oder kationisches Netzmittel, ein nichtionisches Trennmittel und einen Härter.

Für die erfindungsgemäß einsetzbaren Melamin-Formaldehyd-Harze gilt das bereits einleitend zu aus dem Stand der Technik bekannten Melamin-Formaldehyd-Harzen, Gesagte. Der Einsatz von Melamin-Formaldehyd-Harzen hat sich für Imprägnierharz-Zusammensetzungen als besonders praxisgerecht erwiesen, da diese die mechanischen (z.B. Härte, Abriebfestigkeit, Kratzfestigkeit und/oder Abnutzungsbeständigkeit) und optischen Anforderungen, die üblicherweise an Imprägnierharz-Zusammensetzungen gestellt werden, besonders gut erfüllen.

Vorzugsweise ist das Melamin-Formaldehyd-Harz ein Kondensat mit einem Molverhältnis von Formaldehyd zu Melamin von 1:1,2 bis 1:1,7. Bevorzugt weist das erfindungsgemäß einsetzbare Melamin-Formaldehyd-Harz einen pH-Wert im Bereich von 8 bis 11, bevorzugt von 9 bis 11 und besonders bevorzugt von 9,3 bis 10 auf.

Der Trübungspunkt des erfindungsgemäß einsetzbaren Melamin-Formaldehyd-Harzes liegt bevorzugt im Bereich von 35 bis 65 °C, bevorzugt bei 35 bis 50 °C, insbesondere bei 40 bis 45 °C. Zur Messung des Trübungspunktes wird eine Probe des Umsetzungsprozesses soweit mit Wasser verdünnt, dass der Gehalt an Melamin-Formaldehyd-Kondensat, das bei der Umsetzung entstanden ist und gegebenenfalls noch vorhandenes monomeres Melamin und Formaldehyd enthält, 6,75 Gew.-%, bezogen auf das Gesamtgewicht der Harz-Zusammensetzung, beträgt. Die Menge an Melamin-Formaldehyd-Kondensat, Melamin und Formaldehyd lässt sich aus der Menge der Einsatzstoffe errechnen, wobei das in dem Melamin-Formaldehyd-Kondensat gebundene Melamin und Formaldehyd auch als monomeres Melamin und Formaldehyd gerechnet wird. Dieser errechnete Gehalt stimmt mit dem nach der in der DIN 12 605 beschriebenen Methode ermittelten Wert des Feststoffgehalts dann überein, wenn man diesem noch ca. 2 % hinzurechnet. Die so vorbereitete Probenlösung wird bis zur Bildung einer klaren Lösung erwärmt und anschließend mit einer Geschwindigkeit von ca. 10°C pro Minute abgekühlt. Der Trübungspunkt ist die Temperatur bei der eine Trübung entsteht, die mit bloßem Auge bei Durchsicht durch ein Probegefäß mit einer Schichtdicke von 1 cm sichtbar ist.

Der Feststoffgehalt des Melamin-Formaldehyd-Harzes liegt vorzugsweise von 50 bis 70 Gew.-%, bevorzugter 58 bis 65 Gew.-% und insbesondere bevorzugt 60 bis 63 Gew.-%, bezogen auf das Gesamtgewicht des Harzes.

Gemäß einer bevorzugten Ausführungsform enthält die Imprägnierharz-Zusammensetzung das Melamin-Formaldehyd-Harz in einer Menge von 25 bis 60 Gew.-%, bezogen auf das Gesamtgewicht der Harz-Zusammensetzung.

Die erfindungsgemäße Harz-Zusammensetzung ist eine Imprägnierharz-Zusammensetzung, die ein nichtionisches und/oder kationisches Netzmittel enthält. Überraschenderweise wurde festgestellt, dass durch den Einsatz eines nichtionischen und/oder kationischen Netzmittels die oben aufgeführten, aus dem Stand der Technik bekannten Probleme weitestgehend vermieden oder reduziert werden können, aber dennoch die hohen, an Harze, insbesondere Imprägnierharze, gestellten Anforderungen erfüllt werden können. Die erfindungsgemäß eingesetzten nichtionischen und/oder kationischen Netzmittel weisen eine gute Kompatibilität mit der Harz-Zusammensetzung und dem darin enthaltenen an den primären Amingruppen kovalent modifizierten Polyhexamethylenguanidin (PHMG) und/oder an den primären Amingruppen kovalent modifizierten Polyhexamethylenbiguanid (PHMB) auf.

Praktische Versuche haben gezeigt, dass durch Verwendung der üblicherweise in Imprägnierharz-Zusammensetzungen eingesetzten anionischen Netzmittel, sich der erfindungsgemäße Erfolg nicht ausreichend einstellt. Verarbeitungsprodukte, die aus Imprägnierharz-Zusammensetzungen hergestellt wurden, die ein an den primären Amingruppen kovalent modifiziertes Polyhexamethylenguanidin (PHMG) und/oder ein an den primären Amingruppen kovalent modifiziertes Polyhexamethylenbiguanid (PHMB) und anionische Netzmittel enthielten, wiesen zwar gute mechanische und optische Eigenschaften auf, jedoch war - trotz der Anwesenheit des an den primären Amingruppen kovalent modifizierten Polyhexamethylenguanidins (PHMG) und/oder des an den primären Amingruppen kovalent modifizierten Polyhexamethylenbiguanids (PHMB) - eine nur unzureichende antimikrobielle Wirkung zu beobachten.

Netzmittel sind dem Fachmann bekannt und - in anionischer Form - übliche Bestandteile von Imprägnierharz-Zusammensetzungen. Unter Netzmittel versteht der Fachmann grenzflächenaktive Substanzen, die die Benetzbarkeit von Feststoffen durch Flüssigkeiten verbessern. Netzmittel setzen die Oberflächenspannung von Flüssigkeiten und die Grenzflächenspannung zwischen Flüssigkeit und Feststoffen herab. Grundsätzlich bestehen Netzmittel aus einem unpolaren (hydrophoben) und einem polaren (hydrophilen) Teil. Als unpolarer Teil kann z.B. eine Alkylgruppe dienen. Der polare Teil kann verschieden aufgebaut sein und bestimmt die Klassifizierung des Netzmittels in nichtionische, anionische, kationische und amphotere Netzmittel. Nichtionische Netzmittel können als unpolare Gruppe einen Alkylrest (C₁₂-C₁₈) und als polare Gruppen eine Hydroxylgruppe und/oder eine Ethergruppe aufweisen. Anionische Netzmittel weisen mindestens eine negativ geladene funktionale Gruppe auf. Die polare Gruppe kann dabei eine negativ geladene funktionale Gruppe, insbesondere -COO-(Carboxylat), -SO₃- (Sulfonat) oder -SO₄²⁻ (Sulfat) sein. Kationische Netzmittel können als polare Gruppe beispielsweise eine quartäre Ammonium-Gruppe (R₄N⁺) aufweisen. Netzmittel weisen typischerweise einen HLB-Wert von ca. 6,5 bis ca. 9,5 auf. Hierbei steht HLB für "hydrophilic-lipophilic balance", ein für den Fachmann geläufiger Fachbegriff (s. z.B. "Pharmazeutische Technologie", Voigt, Deutscher Apotheker Verlag Stuttgart, 2000, S. 348 ff). Vorzugsweise weist das nichtionische Netzmittel einen HLB nach Griffin von 10 bis 18 auf.

Das erfindungsgemäß einsetzbare Netzmittel ist ein nichtionisches und/oder kationisches Netzmittel. Bevorzugte nichtionische Netzmittel sind ausgewählt aus der Gruppe, bestehend aus Polyalkylenglycolether, Alkylpolyglucosiden und Nonylphenolethoxylaten und Fettalkoholethoxylaten und deren Mischungen. Besonders bevorzugt sind Polyalkylenglycolether und insbesondere bevorzugt sind Fettalkoholethoxylate (FAEO).

In einer bevorzugten Ausführungsform weist die Imprägnierharz-Zusammensetzung das nichtionische und/oder kationische Netzmittel in einer Menge von 0,1 bis 3 Gew.-%, bevorzugt von 0,2 bis 1,0 Gew.-% und insbesondere bevorzugt von 0,2 bis 0,4 Gew.-%, bezogen auf den Festharzanteil des Harzes, auf.

Die erfindungsgemäße Harz-Zusammensetzung ist eine Imprägnierharz-Zusammensetzung, die ein nichtionisches Trennmittel enthält. Überraschenderweise wurde festgestellt, dass durch den Einsatz eines nichtionischen Trennmittels die oben aufgeführten, aus dem Stand der Technik bekannten Probleme weitestgehend vermieden oder reduziert werden können, aber dennoch die hohen Anforderungen an Imprägnierharze, erfüllt werden können. Die erfindungsgemäß eingesetzten nichtionischen Trennmittel weisen eine gute Kompatibilität mit der Imprägnierharz-Zusammensetzung und dem darin enthaltenen an den primären Amingruppen kovalent modifizierten Polyhexamethylenguanidin (PHMG) und/oder an den primären Amingruppen kovalent modifizierten Polyhexamethylenbiguanid (PHMB) auf.

Unter Trennmittel werden allgemein feste oder flüssige Stoffe verstanden, die die Adhäsionskräfte zwischen zwei aneinandergrenzenden Oberflächen (beispielsweise Formteil/Form) verringern, d. h. ihr Verkleben verhindern, indem sie zwischen beiden Oberflächen einen leicht trennbaren Film bilden (Adhäsivmittel). Die allgemeinen Eigenschaften von Trennmitteln sind chemische Indifferenz, gutes Spreitungs-Vermögen, ein dem Verarbeitungsprozess angepasster Schmelzpunkt, geringe Flüchtigkeit und bei Flüssigkeiten geringe Löslichkeit in der zu trennenden Substanz. Trennmittel werden beispielsweise in Form von Dispersionen (Emulsionen oder Suspensionen), Sprays, Pasten, Pulvern angewendet. Einen Sonderfall stellen die sogenannten internen Trennmittel dar, welche in das zu entformende Gut eingemischt werden und sich entweder an der Oberfläche des zu entformenden Guts anzureichern vermögen oder eine schnellere Aushärtung der Oberfläche des zu entformenden Guts bewirken. Typische Trennmittel sind Silicone (in Form von Ölen, Öl-Emulsionen in Wasser, Fetten u. Harzen), Wachse (im Wesentlichen natürliche u. synthetische Paraffine mit und ohne funktionelle Gruppen), Metallseifen (Metall-Salze von Fettsäuren, wie Calcium-, Blei-, Magnesium-, Aluminium-, Zinkstearat), Fette, Polymere (Polyvinylalkohol, Polyester u. Polyolefine), Fluorkohlenstoffe, anorganische Trennmittel in Form von Pudern (wie Graphit, Talk und Glimmer). Trennmittel können unterschiedliche Strukturen aufweisen und können daher in anionische, kationische und nichtionische Trennmittel unterteilt werden.

In Imprägnierharz-Zusammensetzungen werden vom Fachmann üblicherweise vor allem anionische Trennmittel eingesetzt. Hierzu zählen Fettsäurealkylsulfonate und Fettsäurealkylphosphate. Diese anionischen Trennmittel haben den Vorteil, dass sie synthetisch gut zugänglich sind und damit wirtschaftlich günstig.

Praktische Versuche haben gezeigt, dass durch Verwendung der üblicherweise in Imprägnierharz-Zusammensetzungen eingesetzten anionischen Trennmittel sich der erfindungsgemäße Erfolg nicht ausreichend einstellt. Verarbeitungsprodukte, die aus Harz-Zusammensetzungen hergestellt wurden, die ein an den primären Amingruppen kovalent modifiziertes Polyhexamethylenguanidin (PHMG) und/oder ein an den primären Amingruppen kovalent modifiziertes Polyhexamethylenbiguanid (PHMB) und anionische Trennmittel enthielten, wiesen zwar gute mechanische und optische Eigenschaften auf, jedoch war - trotz der Anwesenheit des an den primären Amingruppen kovalent modifizierten Polyhexamethylenguanidins (PHMG) und/oder des an den primären Amingruppen kovalent modifizierten Polyhexamethylenbiguanids (PHMB) -nur eine unzureichende antimikrobielle Wirkung zu beobachten.

Bevorzugte nichtionische Trennmittel sind ausgewählt aus der Gruppe, bestehend aus Fettsäureglyceriden, ethoxylierten Fettalkoholen und höhere Fettsäurephosphatestern und deren Mischungen. Besonders bevorzugt sind Fettsäureglyceride und insbesondere bevorzugt sind ethoxylierte Fettalkohole.

Es wurde auch gefunden, dass sich vorteilhafte Ergebnisse einstellen, je geringer der Anteil von anionischen Netzmitteln und/oder anionischen Trennmitteln in der Imprägnierharz-Zusammensetzung ist. Praktische Versuche haben ergeben, dass die üblicherweise in Imprägnierharz-Zusammensetzungen eingesetzten anionischen Netzmittel und/oder anionischen Trennmittel in Verbindung mit den übrigen Komponenten, insbesondere des an den primären Amingruppen kovalent modifizierten Polyhexamethylenguanidins (PHMG) und/oder an den primären Amingruppen kovalent modifizierten Polyhexamethylenbiguanids (PHMB), zu schlechteren Ergebnissen hinsichtlich antimikrobieller Aktivität, mechanischen und/oder optischen Eigenschaften führen. Daher ist es gemäß einer Ausführungsform der Erfindung vorgesehen, deren Einsatz zu minimieren oder diese gar nicht erst einzusetzen.
In einer bevorzugten Ausführungsform weist die Harz-Zusammensetzung höchstens 0,05 Gew.-% anionische Netzmittel, insbesondere höchstens 0,01 Gew.-% anionische Netzmittel, bezogen auf den Festharzanteil des Harzes, und/oder höchstens 0,05 Gew.-% anionische Trennmittel, insbesondere höchstens 0,01 Gew.-% anionische Trennmittel, bezogen auf den Festharzanteil des Harzes, auf. Vorzugsweise weist die Harz-Zusammensetzung kein anionisches Netzmittel und/oder anionisches Trennmittel auf. Anders ausgedrückt enthält die erfindungsgemäße Harz-Zusammensetzung vorzugsweise als Netzmittel ausschließlich nichtionische und/oder kationische Netzmittel und/oder als Trennmittel ausschließlich nichtionische Trennmittel.

In einer bevorzugten Ausführungsform weist die Imprägnierharz-Zusammensetzung das nichtionische und/oder kationische Trennmittel in einer Menge von 0,1 bis 1,0 Gew.-%, bevorzugt von 0,2 bis 0,5 Gew.-% und insbesondere bevorzugt von 0,2 bis 0,4 Gew.-%, bezogen auf den Festharzanteil des Harzes, auf.
Die erfindungsgemäße Harz-Zusammensetzung ist eine Imprägnierharz-Zusammensetzung, die einen Härter aufweist. Härter werden bei den Imprägnierharzen zur Förderung der Polymerisation bzw. der Aushärtung eingesetzt.

Härter, welche in Imprägnierharz-Zusammensetzungen, die Melamin-Formaldehyd-Harz enthalten, eingesetzt werden, setzen typischerweise in Gegenwart von Wasser und/oder bei Wärmeeinwirkung mindestens eine Säure frei. Besonders bevorzugt setzt ein solcher Härter in Gegenwart von Wasser und/oder bei Wärmeeinwirkung eine Säure frei. Auf diese Weise kann gezielt gesteuert werden, unter welchen Bedingungen der Härter die Säure freisetzt. Dies erlaubt eine gute Kontrolle über das Verfahren. Typischerweise wird eine Brönsted-Säure freigesetzt. Brönsted-Säuren sind dem Fachmann allgemein bekannt. Beispiele und Eigenschaften von Brönsted-Säuren sind beispielsweise im "Basiswissen der Chemie", C. Mortimer, Thieme, 7. Auflage, 2001 auf den Seiten 281 bis 290 beschrieben. Ferner kann als Härter auch eine Brönsted-Säure eingesetzt werden.

Erfindungsgemäß einsetzbare Härter für Imprägnierharz-Zusammensetzungen, die Melamin-Formaldehyd-Harz enthalten, sind beispielsweise para-Toluolsulfonsäure, Morpholin, para-Toluolsulfonsäure-Morpholinsalze, Alkylaminsalze, Ammonium-Salze, Morpholin-p-Toluolsulfonat, Ethanolamin-Hydrochlorid und deren Mischungen.

Praktische Versuche haben gezeigt, dass obwohl es bei den Komponenten Netzmittel und Trennmittel in der erfindungsgemäßen Imprägnierharz-Zusammensetzung wichtig ist, nichtionische und/oder kationische Vertreter einzusetzen, die oben genannten Säure-freisetzenden Härter ohne Qualitätseinbußen verwendet werden können.

In einer bevorzugten Ausführungsform weist die Imprägnierharz-Zusammensetzung den Härter in einer Menge von 0,1 bis 1,0 Gew.-%, bevorzugt von 0,3 bis 0,8 Gew.-% und insbesondere bevorzugt von 0,5 bis 0,6 Gew.-%, bezogen auf den Festharzanteil des Harzes, auf.

Neben den oben beschriebenen Komponenten kann die erfindungsgemäße Harz-Zusammensetzung weitere Zusatzstoffe enthalten. Diese weiteren Zusatzstoffe können unabhängig davon in der Harz-Zusammensetzung enthalten sein, ob diese kein weiteres Harz enthält oder vorzugsweise eine Imprägnierharz-Zusammensetzung, ferner enthaltend Melamin-Formaldehyd-Harz, nichtionisches und/oder kationisches Netzmittel, nichtionisches Trennmittel und Härter, oder vorzugsweise eine Lackharz-Zusammensetzung, ferner enthaltend strahlenhärtendes Acrylatharz und Photoinitiator, ist.

So enthält die Harz-Zusammensetzung gemäß einer bevorzugten Ausführungsform einen oder mehrere mehrwertige Alkohole. Besonders bevorzugt sind C2- bis C12-Diole wie beispielsweise Diethylenglykol, Propylenglykol, Butandiol-1,4, Butylenglykol, Pentandiol, Propantriol und/oder Hexandiol, insbesondere Diethylenglykol. Die mehrwertigen Alkohole werden bevorzugt in einer Menge von 0,5 bis 10 Gew.-%, bevorzugt 1 bis 5 Gew.-% und insbesondere bevorzugt 3,5 bis 5 Gew.-%, bezogen auf den Festharzanteil des Harzes, eingesetzt. Die vorgenannten Alkohole erfüllen insbesondere die Funktion eines Weichmachers.

Ferner kann die Harz-Zusammensetzung Weichmacher enthalten. Bevorzugte Weichmacher sind ausgewählt aus der Gruppe bestehend aus ε-Caprolactam, Paratoluolsulfonamid und deren Mischungen. Bevorzugt wird der Weichmacher in einer Menge von 0,1 bis 10 Gew.-%, bevorzugt 0,5 bis 3 Gew.-% und insbesondere bevorzugt 0,5 bis 2,5 Gew.-%, bezogen auf den Festharzanteil des Harzes, eingesetzt. In einer weiteren Ausführungsform kann die erfindungsgemäße Harz-Zusammensetzung ferner als weitere Komponente eine quartäre Ammonium-Verbindung enthalten. Vorzugsweise ist die quartäre Ammonium-Verbindung ausgewählt aus der Gruppe, bestehend aus Didecyldimethylammoniumchlorid (DDAC), Dimethyloctadecyl[3-(trimethoxysilyl)propyl]ammonium, Dimethyltetradecyl[3-(trimethoxysilyl)propyl]ammoniumchlorid, Alkyl (C₁₂-₁₈)dimethylbenzylammoniumchlorid (ADBAC(C₁₂₋₁₈)), Alkyl(C₁₂-₁₆)dimethylbenzylammoniumchlorid (ADBAC/BKC(C₁₂₋C₁₆)), Didecyldimethylammoniumchlorid (DDAC(C₈₋₁₀)), Alkyl(C_{12- 14})dimethylbenzylammoniumchlorid (ADBAC(₁₂₋₁₄)) und Alkyl(C_{12- 14})ethylbenzylammonium chlorid (ADEBAC(C₁₂₋₁₄)), Dialkyl(C_{8- 10})dimethylammoniumchlorid,Alkyl(C₁₂₋₁₄)dimethyl(ethylbenzyl)ammoniumchlorid.

Die quartäre Ammonium-Verbindung kann dabei in einer Menge von 0,01 bis 3 Gew.-%, bevorzugt 0,1 bis 2 Gew.-%und insbesondere bevorzugt 0,5 bis 1 Gew.-%, bezogen auf den Festharzanteil des Harzes, in der Harz-Zusammensetzung enthalten sein.

Ferner wird ein Verfahren zur Herstellung der erfindungsgemäßen Harz-Zusammensetzung beschrieben. Die Harz-Zusammensetzung wird durch Mischen der jeweiligen Komponenten erhalten. Die Harz-Zusammensetzung kann durch gängige Verfahren hergestellt werden.

In einer Ausführungsform des Verfahrens, bei dem die Harz-Zusammensetzung eine Imprägnierharz-Zusammensetzung, ferner enthaltend Melamin-Formaldehyd-Harz, nichtionisches und/oder kationisches Netzmittel, nichtionisches Trennmittel und Härter, ist, wird das Melamin-Formaldehyd-Harz als Vorkondensat in einem wässrigen Medium mit Melamin und Formaldehydlösung umgesetzt. Das an den primären Amingruppen kovalent modifizierte Polyhexamethylenguanidin (PHMG) und/oder das an den primären Amingruppen kovalent modifizierte Polyhexamethylenbiguanid (PHMB) kann vor, während oder nach der Umsetzung des Melamins mit dem Formaldehyd hinzugefügt werden. Vorzugsweise wird das an den primären Amingruppen kovalent modifizierte Polyhexamethylenguanidin (PHMG) und/oder das an den primären Amingruppen kovalent modifizierte Polyhexamethylenbiguanid (PHMB) gemeinsam mit dem Weichmacher hinzugefügt.

Vorteilhafterweise liegt der pH-Wert der wässrigen Kondensationsphase im Bereich von 8,2 bis 9,7, bevorzugt 8,4 bis 9,4, insbesondere 8,8 bis 9,3. Der Temperaturbereich liegt bevorzugt bei 80 bis 120°C und besonders bevorzugt bei 95 bis 103 °C. Das Molverhältnis von Melamin zu Wasser beträgt bevorzugt 0,1 bis 3,0, bevorzugter 0,1 bis 2,8 und besonders bevorzugt 0,1 bis 2,5. Zur Einstellung dieser Bereiche kann gegebenenfalls Wasser durch Destillation bei Normaldruck entfernt werden. Melamin wird üblicherweise in fester Form eingesetzt. Formaldehyd kommt üblicherweise in Form konzentrierter wässriger Lösungen, beispielsweise als 30 bis 60 Gew.-%-ige wässrige Lösung, bevorzugt als 40 bis 45 Gew.-%-ige Lösung, zum Einsatz. Vorteilhafterweise wird die Kondensationsreaktion so lange durchgeführt, bis die Harz-Zusammensetzung einen Trübungspunkt von 40 bis 45 °C aufweist.

Es können auch die oben genannten weiteren Komponenten der Harz-Zusammensetzung zugefügt werden. Im Übrigen gilt das oben jeweils zu den Komponenten der Harz-Zusammensetzung bereits Gesagte.

Ein weiterer Gegenstand der Erfindung ist eine Harzbeschichtung erhältlich durch Polymerisation der erfindungsgemäßen Harz-Zusammensetzung.

Wenn hier von "Harzbeschichtung" die Rede ist, so ist damit die ganz oder teilweise ausgehärtete, d.h. polymerisierte, erfindungsgemäße Harz-Zusammensetzung gemeint. Bezüglich der Bestandteile und Eigenschaften der Harzbeschichtung gilt daher das bereits zur erfindungsgemäßen Harz-Zusammensetzung Gesagte.

Es wurde gefunden, dass die erfindungsgemäße Harzbeschichtung den hohen Qualitätsanforderungen an Oberflächen in der Laminatherstellung genügt. Insbesondere zeigen die erfindungsgemäßen Harzbeschichtungen eine fast vollständige Transparenz und/oder die Erhaltung des hohen Glanzes des Laminats nach Aufbringung und Aushärtung der erfindungsgemäßen Harz-Zusammensetzung. Ferner haben praktische Versuche gezeigt, dass die erfindungsgemäße Harzbeschichtung eine normkonforme Mikrokratzbeständigkeit aufweist. Diese wurde mittels eines modifizierten Martindale Tests, einem genormtem Prüfverfahren zur Bestimmung der Mikrokratzbeständigkeit bei Laminatböden (DIN EN ISO 12947:04/1999 bzw. IHD W-445, Version Mai 2007), bestimmt.

Die erfindungsgemäße Harzbeschichtung enthält bevorzugt das Polymerisat des an den primären Amingruppen kovalent modifizierten Polyhexamethylenguanidins (PHMG) und/oder des an den primären Amingruppen kovalent modifizierte Polyhexamethylenbiguanids (PHMB) oder deren Co-Polymerisat mit einem weiteren Harz und/oder oben beschriebene Harz-Zusammensetzung. Zu diesen Komponenten gilt das oben bereits Gesagte.

Die Polymerisation bzw. das Aushärten der erfindungsgemäßen Harz-Zusammensetzung zu der Harzbeschichtung kann unter Einwirkung des in der Harz-Zusammensetzung ohne weiteres Harz enthaltenen mehrfachfunktionalen Amins als Härter, insbesondere Tetramethylentriamin, des in der Imprägnierharz-Zusammensetzung enthaltenen Härters entweder bei erhöhter Temperatur und/oder Druck oder unter Einwirkung des in der Harz-Zusammensetzung, enthaltend strahlenhärtendes Acrylatharz, enthaltenen Photoinitiators unter Einsatz energiereicher Strahlung, insbesondere UV-Strahlung, stattfinden. Dies kann beispielsweise bei der Vortrocknung eines Imprägnats, Overlays und/oder bei dem Verpressen zu einem Laminat der Fall sein. Es ist auch denkbar, dass ein weiterer Polymerisationsprozess während der Lagerung des Imprägnats, Overlays und/oder des Laminats erfolgt. Dies kann beispielsweise durch weitere Anwesenheit oder nachträgliche Freisetzung eines Härters oder Photoinitiators bei dem gelagerten oder bereits verbauten Imprägnat, Overlay und/oder Laminat geschehen. Im Übrigen gilt das zur Polymerisation bzw. zum Aushärten bereits weiter oben Gesagte.

Da die erfindungsgemäße Harz-Zusammensetzung, die ein weiteres Harz enthält, das an den primären Amingruppen kovalent modifizierte Polyhexamethylenguanidin (PHMG) und/oder das an den primären Amingruppen kovalent modifizierte Polyhexamethylenbiguanid (PHMB) während des Aushärtens in die Harz-Matrix des weiteren Harzes einpolymerisiert, ist die Harzbeschichtung dadurch gekennzeichnet, dass sie ein Co-Polymerisat aus dem an den primären Amingruppen kovalent modifizierten Polyhexamethylenguanidin (PHMG) und/oder dem an den primären Amingruppen kovalent modifizierten Polyhexamethylenbiguanid (PHMB) und dem weiteren Harz enthält. Für die Harzbeschichtung sowie für die weiteren Komponenten der Harz-Zusammensetzung gilt jeweils das bereits Gesagte. Die Harzbeschichtung kann die oben beschrieben zusätzlichen Substanzen bzw. Additive enthalten.

Die Harzbeschichtung kann im Wesentlichen ganz oder teilweise aus dem Polymerisat des an den primären Amingruppen kovalent modifizierten Polyhexamethylenguanidins (PHMG) und/oder des an den primären Amingruppen kovalent modifizierten Polyhexamethylenbiguanids (PHMB) oder dessen Co-Polymerisat mit einem weiteren Harz, vorzugsweise strahlenhärtendem Acrylatharz oder Melamin-Formaldehyd-Harz, bestehen. Die Harzbeschichtung wird vorzugsweise durch Polymerisation bzw. Aushärten erhalten. Insbesondere wird die Harzbeschichtung durch ganze oder teilweise Polymerisation bzw. Aushärten der erfindungsgemäßen Harz-Zusammensetzung erhalten.

Die Harzbeschichtung kann beispielsweise als Beschichtung, insbesondere als Lack oder als sogenanntes Flüssig-Overlay vorliegen. Die Harzbeschichtung kann als Teil eines Laminats vorliegen. Die Harzbeschichtung kann aber auch selbst ein Trägermaterial enthalten. In dieser Form kann die Harzbeschichtung beispielsweise als Imprägnat und/oder Teil eines Laminats vorliegen.

Die Harzbeschichtung enthält die folgenden Komponenten:
iii) ein Polymerisat aus einem an den primären Amingruppen kovalent modifizierten Polyhexamethylenguanidin (PHMG) und/oder einem an den primären Amingruppen kovalent modifizierten Polyhexamethylenbiguanid (PHMB) und einen Härter, insbesondere ein mehrfachfunktionales Amin, besonders bevorzugt Triethylentetraamin; oder
iv) ein Co-Polymerisat aus an den primären Amingruppen kovalent modifizierten Polyhexamethylenguanidin (PHMG) und/oder einem an den primären Amingruppen kovalent modifizierten Polyhexamethylenbiguanid (PHMB) und einem weiteren Harz, wobei das weitere Harz ein Melamin-Formaldehyd-Harz oder ein strahlenhärtendes Acrylatharz ist.

Das weitere Harz in Komponente ii) ist ein Melamin-Formaldehyd-Harz, so dass die Harzbeschichtung zusätzlich ein nichtionisches und/oder kationisches Netzmittel, ein nichtionisches Trennmittel, und einen Härter enthält.

Die Komponente ii) ist ein Co-Polymerisat aus dem Hydrochlorid des an den primären Amingruppen kovalent modifizierten Polyhexamethylenguanidins (PHMG) und/oder des an den primären Amingruppen kovalent modifizierten Polyhexamethylenbiguanids (PHMB) und dem weiteren Harz, wobei das weitere Harz ein Melamin-Formaldehyd-Harz ist. Es gilt zu den weiteren Komponenten der Komponente ii) in Abhängigkeit des ausgewählten weiteren Harzes das jeweils oben Gesagte.

In einer weiteren bevorzugten Ausführungsform weist die Harzbeschichtung eine Dicke von 0,01 bis 2 mm, bevorzugt von 0,05 bis 1 mm und insbesondere bevorzugt von 0,1 bis 0,3 mm auf.

Die erfindungsgemäße Harz-Zusammensetzung und die Harzbeschichtung lassen sich in der Holzwerkstoff-, Imprägnat- und/oder Laminatherstellung verwenden.

Ein weiterer Gegenstand der Erfindung ist ein Imprägnat, enthaltend
i) die erfindungsgemäße Harz-Zusammensetzung und
ii) ein Imprägnatträgermaterial.

Unter "Imprägnat", wie hier verwendet, wird ein lagerfähiges Erzeugnis verstanden, welches insbesondere ein saugfähiges Imprägnatträgermaterial, das mit der erfindungsgemäßen Harz-Zusammensetzung beschichtet, imprägniert oder getränkt wurde, enthält. Hierbei befindet sich typischerweise auf der äußersten Schicht bzw. der Oberfläche des Imprägnats eine mindestens teilweise molekulare Schicht der (teil-)ausgehärteten Harz-Zusammensetzung. Das Imprägnat kann aber auch bewusst ganz oder teilweise mit dem Harz getränkt, beschichtet oder imprägniert sein.

Überraschenderweise wurde gefunden, dass das erfindungsgemäße Imprägnat eine hervorragende Stabilität gegenüber äußeren Einflüssen aufweist, und gleichzeitig die geforderten Qualitätsmerkmale sowie die antimikrobielle Wirksamkeit beibehält.

Vorteilhaft ist auch die hervorragende Lagestabilität des Imprägnats. Das Imprägnat zeigte während und nach der Lagerung keine Qualitätseinbußen. Dies ist ein wichtiger Aspekt u.a. bei der Laminatherstellung, da Imprägnate typischerweise vor der Weiterverarbeitung zu z.B. Laminaten separat hergestellt und über Wochen zwischengelagert werden. Daher müssen solche Imprägnate nicht nur auch nach Wochen weiter verarbeitbar sein, sondern im vorliegenden Fall auch ihre antimikrobiellen Eigenschaften beibehalten. Da in vorherigen Versuchen mit anderen antimikrobiellen Substanzen mehrfach gefunden wurde, dass diese teilweise schon bei der Herstellung und auch bei der Weiterverabeitung ihre antimikrobielle Wirkung verloren, war es überraschend, dass das erfindungsgemäße Imprägnat zum einen nach Lagerung problemlos weiterverarbeitet werden und zum anderen auch nach der Lagerung und/oder Weiterverarbeitung zufriedenstellende antimikrobielle Eigenschaften aufwies.

Das erfindungsgemäße Imprägnat weist mindestens eine Schicht i) auf mindestens einer seiner Hauptseiten auf, die ganz oder teilweise aus der Harz-Zusammensetzung besteht oder diese enthält.

Wenn hier oder anderer Stelle von "Hauptseiten" oder "beiden Hauptseiten" bzw. "einer der Hauptseiten" die Rede ist, dann sind damit die Ober- und Unterseite bzw. mindestens die Ober- und/oder die Unterseite des Imprägnatträgermaterials, des Imprägnats oder des Laminats gemeint. Wenn hier oder anderer Stelle von "Oberseite" die Rede ist, dann ist damit die im späteren Produkt nach Außen liegende Seite gemeint. Entsprechend ist die "Unterseite" die der Oberseite gegenüberliegende Seite. Beispielsweise bedeutet dies für die Verarbeitung eines fertigen Imprägnats in der Laminatherstellung, dass die Oberseite die, bezogen auf den Innenausbau, nach Innen gerichtete Seite ist, wohingegen die Unterseite zu dem Laminatträgermaterial zeigt.

Typischerweise wird das Imprägnat dadurch erhalten, dass ein Imprägnatträgermaterial mit der erfindungsgemäßen Harz-Zusammensetzung getränkt, beschichtet und/oder imprägniert wurde bevor sie unter Druck und/oder Temperatur zum Imprägnat getrocknet oder vorgetrocknet wurde. Die Imprägnierharz-Zusammensetzung kann durch Sprühen, Tauchen oder Walzen auf das Imprägnatträgermaterial auf mindestens eine der Hauptseiten des Imprägnatträgermaterials aufgetragen werden. Es ist bei dem erfindungsgemäßen Imprägnat vorgesehen, dass das Aufbringen der Harz-Zusammensetzung direkt auf das Imprägnatträgermaterial erfolgt. Es erfolgt keine vorherige Beschichtung mit einem Imprägnier- oder Tränkharz. Das Imprägnieren bzw. Tränken oder Beschichten kann auch mehrfach vorgenommen werden, wobei optional nach jedem Beschichtungs-, Imprägnierungs- und/oder Tränkungsschritt die Schicht i) ganz oder teilweise getrocknet werden kann. Bei der sich an die Imprägnierung, Tränkung und/oder Beschichtung anschließende Druck- und/oder Temperatureinwirkung kann ein ganz oder teilweises Aushärten bzw. Kondensieren der Harz-Zusammensetzung stattfinden, wodurch sich die erfindungsgemäße Harzbeschichtung ganz oder teilweise ausbilden kann. Typischerweise werden die erfindungsgemäßen Imprägnate mit der Harz-Zusammensetzung imprägniert und/oder getränkt, sodass mindestens eine der Hauptseiten des Imprägnatträgermaterials oder beide Hauptseiten des Imprägnatträgermaterials zumindest eine molekulare Schicht der Harz-Zusammensetzung bzw., wenn diese aushärtet, die Harzbeschichtung aufweisen. Ferner weist das Imprägnat mindestens nach der Beschichtung, Tränkung und/oder Imprägnierung eine molekulare Schicht der Harz-Zusammensetzung bzw., wenn diese aushärtet, der Harzbeschichtung auf seiner Oberseite auf. Auch bei einem Imprägnat, welches mit der Imprägnierharz-Zusammensetzung durchtränkt wurde, liegt trotz Durchtränkung des Imprägnatträgermaterials mit der erfindungsgemäßen Harz-Zusammensetzung bzw. der daraus erhältlichen Harzbeschichtung eine zumindest molekulare Schicht Harz-Zusammensetzung bzw. der daraus erhältlichen Harzbeschichtung auf einer der Hauptseiten des Imprägnatträgermaterials vor. Gemäß einer Ausführungsform des erfindungsgemäßen Imprägnats weist das Imprägnat mindestens auf einer seiner Hauptseiten eine Schicht der erfindungsgemäßen Harz-Zusammensetzung oder die erfindungsgemäßen Harzbeschichtung auf. Insbesondere befindet sich diese Schicht i) mindestens auf der Oberseite des Imprägnatträgermaterials bzw. des Imprägnats. In einer ganz bevorzugten Ausführungsform ist die Schicht i) des erfindungsgemäßen Imprägnats ein Flüssig-Overlay, das ganz oder teilweise aus der Harz-Zusammensetzung und/oder der Harzbeschichtung besteht oder diese enthält.

In einer weiteren Ausführungsform weist das Imprägnat, die Harz-Zusammensetzung oder die Harzbeschichtung in einer Menge von 30 bis 600 Gew.-%, 350 bis 550 Gew.-% oder 100 bis 180 Gew.-%, jeweils bezogen auf das Trockengewicht des Imprägnatträgermaterials, auf.

In einer anderen Ausführungsform weist das Imprägnat, die Harz-Zusammensetzung oder die Harzbeschichtung in einer Menge von 10 g/m² bis 250 g/m², bevorzugt 50 g/m² bis 150 g/m² und insbesondere bevorzugt 80 g/m² bis 120 g/m².

Nach den Imprägnierungs-, Beschichtungs- und/oder Trocknungsschritten und bevor dieses gelagert oder weiterverarbeitet wird, wird das Imprägnat auf eine definierte Restfeuchte eingestellt. Gemäß einer Ausführungsform der Erfindung weist das Imprägnat eine Restfeuchte von bevorzugt 2 bis 8 Gew.-%, besonders bevorzugt 4 bis 6 Gew.-% auf.

Das erfindungsgemäße Imprägnat umfasst ein Imprägnatträgermaterial. Das Imprägnatträgermaterial enthält vorzugsweise cellulosehaltiges und/oder lignocellulosehaltiges Material.

Wenn hier oder anderer Stelle von "cellulosehaltigen Material" und/oder "lignocellulosehaltigen Material" die Rede ist, dann wird darunter jede Art von Material verstanden, das Cellulose und/oder Lignocellulose enthält. Lignocellulose im Sinne der Erfindung enthält Lignin sowie Cellulose und/oder Hemicellulose. "Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine β-1,4-glykosidische Bindung verknüpft sind. "Hemicellulose" ist eine Sammelbezeichnung für verschiedene Bestandteile pflanzlicher Zellwände. Bei den Hemicellulosen handelt sich um verzweigte Polysaccharide mit einer geringeren Kettenlänge - üblicherweise weniger als 500 Zuckereinheiten - welche aus verschiedenen Zucker-Monomeren aufgebaut sind. Hemicellulose ist im Wesentlichen aus verschiedenen Zucker-Monomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose bestehen zum überwiegenden Teil aus Zucker-Monomeren mit fünf Kohlenstoffatomen (Pentosen). Mannose bzw. Galactose bestehen hauptsächlich aus Zucker-Monomeren mit sechs Kohlenstoffatomen (Hexosen). "Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

Das cellulosehaltiges und/oder lignocellulosehaltiges Material können Partikel, Fasern oder Material sein, die dieses enthalten. Die lignocellulosehaltigen Fasern sind vorzugsweise Holzfasern. Diese Holzfasern können durch Zerfaserung von Holzpartikeln, Holzfasern, Hackschnitzel oder feinteiligem Holzmaterial hergestellt werden. Bevorzugte Holzarten für die Herstellung einer durch das erfindungsgemäße Verfahren erhältlichen Faserplatte sind beispielsweise Nadelhölzer, insbesondere Kiefer- und/oder Fichtenholz. Die cellulosehaltigen Materialen können Holz sein, aus Holz oder cellulosehaltigen Pflanzen stammen.

Das Imprägnatträgermaterial des erfindungsgemäßen Imprägnats ist bevorzugt ausgewählt aus der Gruppe bestehend aus Papier, Vlies, Glasvlies, Faservlies, Gewirke, Dekorpapier, Overlaypapier, Karton, Regeneratpapier, Natronkraftpapier, Pappe und Halbzellstoffen.

Unter "Papier" wird ein flächiger Werkstoff mit zwei Hauptseiten, d.h. einer Oberseite und einer Unterseite, die von den vier Seitenkanten abzugrenzen sind, verstanden, der im Wesentlichen aus cellulosehaltigen Fasern meist pflanzlicher Herkunft besteht und durch Entwässerung einer Fasersuspension auf einem Sieb gebildet wird. Das dabei entstehende Faservlies wird verdichtet und getrocknet. Papier wird in der Regel aus Zellstoff oder aus Holzstoff (aus Holzschliff) oder auch aus Altpapier hergestellt. Ein "Halbzellstoff" ist ein Rohstoff für die Papierherstellung, der aus Holz hergestellt wird und vor allem aus Cellulose und Anteilen von Lignin besteht. Er stellt eine Zwischenstufe zwischen Zellstoff und Holzstoff dar. Je nach flächenbezogener Masse (sogenanntes Flächengewicht) und Eigenschaften wird zwischen Papier (7 g/m² bis 225 g/m²), Karton (150 g/m² bis 600 g/m²) oder Pappe (ab 225 g/m²) unterschieden. Diese Unterscheidung kann nach DIN 6730 vorgenommen werden. Insbesondere sind Papiere, Pappe und/oder Karton saugfähige Imprägnatträgermaterialien. Diese sind vorzugsweise in der Lage, bis zum 7-fachen ihres Trockengewichts der Harz-Zusammensetzung aufzunehmen. Ein Dekorpapier ist ein bedrucktes oder gefärbtes Spezialpapier, das zur dekorativen Beschichtung von Holzwerkstoffen verwendet werden kann. Ein Overlaypapier ist in der Regel ein mindestens teilweise bis gänzlich transparentes (dünnes) Papier, welches beispielsweise bei einem Laminatpaneel den Blick auf das darunter liegende Dekorpapier oder Imprägnatträgermaterial ermöglicht. Overlay und/oder Dekorpapiere werden in der Praxis häufig in Form von Imprägnaten als fertiges einzelnes oder miteinander kombiniertes Produkt bereitgestellt.

Ein weiterer Gegenstand der Erfindung ist ein Laminat, enthaltend
iii. mindestens ein Laminatträgermaterial, und
iv. das erfindungsgemäße Imprägnat oder die erfindungsgemäße Harz-Zusammensetzung.

"Laminat", wie hier verwendet, bezeichnet ein Erzeugnis, das mindestens zwei flächig miteinander verbundene Schichten umfasst. Diese mindestens zwei Schichten können aus gleichen oder unterschiedlichen Materialien bestehen. In der Regel besteht eine dieser Schichten aus einem Laminatträgermaterial iii) auf welches das erfindungsgemäße Imprägnat oder die erfindungsgemäße Harz-Zusammensetzung iv) als zweite Schicht aufgebracht worden ist.

Laminate werden vielseitig im Hausbau, insbesondere im Innenausbau, sowie im Möbelbau eingesetzt, beispielsweise als Wandelement für den Außen- oder Innenbereich, als Laminatfußböden oder für Vorder- und Rückfronten von Möbeln. Die dafür eingesetzten Laminate sind in der Regel aus mindestens zwei Schichten bestehende, quaderförmige Flachprodukte, welche durch sechs Oberflächen definiert sind: Vier Kantenflächen sowie eine Ober- und Unterseite, wobei die Oberseite und die Unterseite hier zusammen und in Abgrenzung zu den Kantenflächen als "Hauptseiten" oder "Oberflächen des Laminats" bezeichnet werden. Mit der Oberseite ist die beim Innenausbau nach Innen gerichtete Seite gemeint. Bei Laminaten, die als Fußbodenpanelen verwendet werden, bedeutet damit "Oberseite"die Seite, die vom Benutzer nach Verbau der Laminatpaneele betreten und betrachtet wird. Damit grenzt sich die "Oberseite"von der "Unterseite" ab, welche beim Innenausbau auf dem Unterbau oder Boden liegt.

An die Deckschicht von Laminaten werden hohe Anforderungen hinsichtlich der optischen oder die Optik beeinflussenden Eigenschaften gestellt. Hierzu zählen beispielsweise Abriebfestigkeit, Härte, Transparenz, Glanz, Farbechtheit und Lichtbeständigkeit. Die oberste Schicht von Laminaten ("Deckschicht") ist vielfach so ausgestaltet, dass sie einen Blick auf das darunter liegende Dekorpapier (wenn vorhanden) oder Laminatträgermaterial ermöglicht, also hochtransparent ist, aber dennoch ausreichend hart und abriebfest ist. Überraschenderweise genügt das erfindungsgemäße Laminat diesen Anforderungen. In praktischen Versuchen hat sich gezeigt, dass das erfindungsgemäße Laminat eine hervorragende Beständigkeit und langhaltende antimikrobielle Wirkung aufweist. Dies war überraschend, da nicht vorherzusehen war, dass sich trotz des Polymerisierens oder Einpolymerisierens des an den primären Amingruppen kovalent modifizierten Polyhexamethylenguanidins (PHMG) und/oder des an den primären Amingruppen kovalent modifizierten Polyhexamethylenbiguanids (PHMB) zum einen eine beständige, kratzfeste Oberflächenbeschichtung ausbildet, und zum anderen die antimikrobielle Wirkung erhalten bleibt. Ferner wurde auch gefunden, dass wenn das erfindungsgemäße Laminat im Möbelbau oder als Fußbodenbelag eingesetzt wird, es den hohen alltäglichen Beanspruchungen standhält. Insbesondere weist die oberste Schicht des Laminats eine hohe Mikrokratzbeständigkeit auf und behält trotz der alltäglichen Beanspruchungen seine sehr hohe Transparenz und Lichtechtheit bei, so dass der gewünschte Blick auf das darunterliegende Dekor- oder Laminatträgermaterial freigehalten wird.

Die erfindungsgemäßen Laminate weisen einen schichtweisen Aufbau auf, wobei bezogen auf den Innenausbau, üblicherweise die oberste Schicht das erfindungsgemäße Imprägnat bildet. Hierbei bildet die Schicht i) des Imprägnats die oberste Schicht des Laminats. Diese oberste Schicht wird hier auch als "Deckschicht" bezeichnet. Diese Deckschicht hat die Funktion, der hohen äußeren Beanspruchung standzuhalten und trotzdem durch sehr hohe Transparenz und Lichtechtheit den Blick auf das darunterliegende Dekor- oder Laminatträgermaterial freizugeben. Da das Laminat das erfindungsgemäße Imprägnat oder aufweist, enthält die Deckschicht eine Beschichtung, die die erfindungsgemäße Harz-Zusammensetzung aufweist oder ganz daraus besteht. Insbesondere kann es sich bei der Deckschicht um die Harzbeschichtung in Form eines Flüssig-Overlays oder in Form eines Lacks handeln. Unter der Deckschicht kann insbesondere ein Dekorpapier vorhanden sein, welches ebenfalls die ganz- oder teilweise ausgehärtete erfindungsgemäße Harz-Zusammensetzung enthalten kann.

Als weitere Schicht weisen erfindungsgemäße Laminate ein Laminatträgermaterial iii) auf, auf dessen Oberseite das erfindungsgemäße Imprägnat aufgebracht ist. Als weitere Schicht können erfindungsgemäße Laminate, insbesondere unterseitig zum Laminatträgermaterial, einen sogenannten Gegenzug bzw. Gegenzugsschicht aufweisen. Der Gegenzug bzw. die Gegenzugschicht ist dazu da, dass sich das Laminat bei Belastung durch die auftretenden Biegekräfte nicht verformt. Der Gegenzug bzw. die Gegenzugschicht kann beispielsweise in Form eines Papiers oder einer Kunststoffschicht vorliegen.

Das erfindungsgemäße Laminat umfasst mindestens ein Laminatträgermaterial. Das Laminatträgermaterial enthält vorzugsweise cellulosehaltiges und/oder lignocellulosehaltiges Material.

Das mindestens eine Laminatträgermaterial kann hierbei ausgewählt sein aus der Gruppe bestehend aus Papier, Imprägnat, Pappe, Dekorpapier, Karton, Kernkarton, Halbzellstoffe, Kork, Vlies, Faservlies, Gewirke, Holz, Holzwerkstoffe und Vollholzplatten. Denkbar und üblich ist ferner, dass das Laminatträgermaterial Kombinationen mehrerer der vorgenannten Materialien enthält. Diese können auch über zusätzliche Bindemittelschichten, beispielsweise Leimschichten, miteinander verbunden sein.

Gemäß einer Ausführungsform handelt es sich bei dem Laminatträgermaterial um eine Holzwerkstoffplatte. Das Laminatträgermaterial kann ein Holzwerkstoff sein. Bevorzugte Holzwerkstoffe sind Holzspanwerkstoffe oder Faserplatten. Wenn hier oder an anderer Stelle von "Platte" die Rede ist, dann ist damit ein quaderförmiges Flachprodukt gemeint, welches durch sechs Oberflächen definiert ist: Vier Kantenflächen sowie eine Ober- und Unterseite, wobei die Oberseite und die Unterseite hier zusammen und in Abgrenzung zu den Kantenflächen als "Hauptseiten" oder "Oberflächen der Platte" bezeichnet werden. Als Laminatträgermaterial können aber auch ein oder mehrere Imprägnate bzw. mit Harz, insbesondere Imprägnierharz, imprägnierte, getränkte oder beschichtete Papierbahnen in erfindungsgemäßen Laminaten eingesetzt werden.

Unter dem Begriff "Holzwerkstoff" werden erfindungsgemäß verschiedenste Werkstoffe verstanden, die aus Holz bestehen oder Holz enthalten. Beispiele für Holzwerkstoffe im Sinne der Erfindung sind Holzplatten, Laminate, Bodenbeläge, Arbeitsplatten, Tischplatten, Paletten und/oder Holzformteile, insbesondere Verbundwerkstoffe aus einzelnen Holzpartikeln. Solche Holzpartikel bzw. Strukturelemente können jegliche Zerkleinerungsprodukte von Cellulose enthaltenden Materialien sein, wie beispielsweise Holzpartikel, insbesondere Holzspäne, feinteiliges Holzmaterial, Holzstrands, Holzfasern, Hackschnitzel und/oder Holzfurniere. Holzwerkstoffe im Sinne dieser Erfindung sind insbesondere solche auf Vollholzbasis, Furnierwerkstoffe, Spanwerkstoffe, Faserwerkstoffe, Faserplatten oder andere Verbundwerkstoffe. Eine allgemeine Übersicht über die Produktgruppe der Holzwerkstoffe findet sich beispielsweise in "Taschenbuch der Holztechnik", A. Wagenführ, F. Scholz, Carl Hanser Verlag, 2. Auflage, 2012 auf den Seiten 128 bis 130.

In einer Ausführungsform kann es sich bei dem Laminatträgermaterial um eine Holzfaserplatte handeln. Unterschiedliche Typen von Faserplatten sind dem Fachmann bekannt. Diese sind beispielsweise im "Taschenbuch der Holztechnik" von A. Wagenführ und F. Scholz, Hanser Verlag, 2012, auf den Seiten 146 bis 149 beschrieben. Holzspanwerkstoffe (Spanplatten im weiteren Sinne) bezeichnet eine Produktgruppe im Bereich der Holzwerkstoffe, die aus Holzpartikeln und einem Bindemittel mittels Wärme und Druck hergestellt werden. Beispiele hierfür sind Spanplatten, Flachpressplatten, Einschichtplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melamin Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden. Holzspanwerkstoffe, ihre Herstellung und Anforderungen an diese sind auch in "Taschenbuch der Holztechnik", A. Wagenführ, F. Scholz, Carl Hanser Verlag, 2. Auflage, 2012 auf den Seiten 143 bis 146 beschrieben.

In einer anderen Ausführungsform kann das Laminatträgermaterial auch eine Holzfaserplatte, wie beispielsweise eine mitteldichte (MDF) oder hochdichte (HDF) Faserplatte sein. Im Gegensatz zu den Holzspanwerkstoffen wird zur Herstellung der Faserplatten das verwendete Holz bis hin zur Holzfaser, Faserbündeln oder Faserbruchstücken aufgeschlossen. Der strukturelle Zusammenhalt der Faserplatten beruht im Wesentlichen auf der Verfilzung der Holzfasern und ihren holzeigenen Bindekräften, es können aber auch Klebstoffe als Bindemittel eingesetzt werden. Die Faser wird aus verholztem Pflanzenmaterial erzeugt. Dies erfolgt durch Hacken des Rohmaterials, anschließendes Dämpfen, Kochen und chemisches und/oder mechanisches Aufschließen bis hin zur Einzelfaser, Faserbündel oder Faserbruchstücken. Bei dem Herstellungsverfahren unterscheidet der Fachmann zwischen dem Nassverfahren (Sedimentieren der Fasern aus einer wässrigen Fasersuspension zum Vlies) und dem Trockenverfahren (trockene Fasern werden mechanisch oder pneumatisch zu einem Vlies verdichtet). Werden die Holzfaserplatten im Nassverfahren hergestellt, unterscheidet man poröse, mittelharte und harte Faserplatten. Werden die Holzfaserplatten im Trockenverfahren hergestellt, unterscheidet man mitteldichte und hochdichte Faserplatten, außerdem gehören in diese Gruppe auch gipsgebundenen Faserplatten. Die entstandenen Matten werden anschließend verpresst. Das Verpressen, wie hier verwendet, erfolgt üblicherweise durch Heißverpressen der Schichten zum Laminat, bei dem die noch nicht vollständig ausgehärtete erfindungsgemäße Zusammensetzung dann weiter kondensiert bzw. aushärtet. Besonders bevorzugt ist die für das Laminat eingesetzte Faserplatte eine DHF, LDF-, MDF-, oder HDF-Platte. Unter DHF-Platte versteht der Fachmann eine diffusionsoffene und feuchtebeständige Holzfaserplatte. Unter LDF-, MDF- und HDF-Platte versteht der Fachmann eine Holzfaserplatte niedriger ("Low Density"), mittlerer ("Medium Density") und hoher ("High Density") Dichte. Holzfaserplatten im LDF-Bereich besitzen eine Dichte von 250 bis 450 kg/m³, im MDF-Bereich von 550 bis 750 kg/m³ und im HDF-Bereich von 800 bis 1000 kg/m³.

In einer Ausführungsform der Erfindung beträgt die Rohdichte der Faserplatte 500 bis 700 kg/m³, bevorzugt 550 bis 650 kg/m³ und insbesondere bevorzugt 580 bis 625 kg/m³. Die Rohdichte kann gemäß EN 323:93-08 bestimmt werden.

In einer weiteren Ausführungsform weist die Faserplatte eine Dicke von 8 bis 30 mm, bevorzugt von 10 bis 22 mm und insbesondere bevorzugt von 12 bis 20 mm auf. In einer Ausführungsform der Erfindung beträgt die Rohdichte der Spanplatte 500 bis 780 kg/m³, bevorzugt 550 bis 650 kg/m³ und insbesondere bevorzugt 580 bis 625 kg/m³. Die Rohdichte kann gemäß EN 323:93-08 bestimmt werden.

In einer weiteren Ausführungsform weist die Faserplatte eine Dicke von 8 bis 40 mm, bevorzugt von 10 bis 32 mm und insbesondere bevorzugt von 12 bis 25 mm auf.

In einer weiteren Ausführungsform weist die Faser- oder Spanplatte bzw. das spätere Laminat mindestens ein form- oder kraftschlüssiges Verbindungselement auf, insbesondere eine Nut und/oder Feder. Dafür kann mindestens eine der Kantenflächen derart ausgestaltet sein, dass diese mit einer anderen Kantenfläche einer anderen Platte verbunden werden kann. Vorzugsweise ist die Verbindung eine Nut-Feder-Verbindung oder Spundung. Besonders bevorzugt ist, wenn die Nut, Feder und/oder Spundung rund, oval, konisch oder eckig ausgebildet ist. Vorzugsweise ist die Verbindung zwischen den Platten formschlüssig. Besonders bevorzugt ist die Verbindung formschlüssig, senkrecht zur Plattenebene.

Dem Fachmann sind solche Nut-Feder-Verbindungen oder Spundungen grundsätzlich bekannt. Unter Nut-Feder-Verbindung oder Spundung werden Verbindungen verstanden, die an ihren Kantenflächen oder Rändern zusammengesteckt oder ineinandergelegt werden können. Bei der Nut-Feder-Verbindung können die beiden zu verbindenden Platten an den Kantenflächen oder Rändern je eine Nut aufweisen, in die als verbindendes drittes Bauteil eine sogenannte Feder eingesteckt oder eingelegt wird. Es ist aber auch denkbar, dass bei den zusammenzusteckenden Platten die eine Kantenfläche oder Rand mindestens eine Nut und die andere Kantenfläche oder Rand mindestens eine Feder aufweist. In einer besonderen Ausführungsform weist die Faserplatte an mindestens einer Kantenfläche eine Nut und an mindestens einer anderen Kantenfläche eine Feder auf. Bei der Spundung kann eine Feder in halber Breite an den Rand eines der beiden zu verbindenden Bauteile eingearbeitet sein.

In einer weiteren Ausführungsform ist das Laminat ein Holzwerkstoff, der direkt mit der Harzbeschichtung beschichtet ist. In einer anderen Ausführungsform ist das Laminat ein Holzwerkstoff, der mit mindestens einem Imprägnat verpresst ist. Insbesondere kann das Imprägnat ein imprägniertes Dekorpapier sein. Alternativ oder zusätzlich können die genannten Ausführungsformen auch eine separat aufgetragene Außenschicht aufweisen (sogenannte Overlay- oder Finish-Schicht), welche die erfindungsgemäße Harz-Zusammensetzung oder die Harzbeschichtung enthält.

Gemäß einer anderen Ausführungsform der Erfindung ist das Laminat ein Schichtstoff, der das erfindungsgemäße Imprägnat und eine und bevorzugt mehrere, mit Imprägnierharz, insbesondere mit der Harz-Zusammensetzung, getränkte Papierschichten, enthält, die unter Hochdruck zusammengefügt wurden. Ein solcher Schichtstoff, der aus mehreren, insbesondere mit der Harz-Zusammensetzung, getränkte Papierschichten hergestellt wurde und eine Dicke von 2 mm oder mehr aufweist, wird hier als Kompaktplatte bezeichnet. Alternativ oder zusätzlich kann der Schichtstoff auch eine separat aufgetragene Außenschicht aufweisen (sogenannte Overlay- oder Finish-Schicht), welche die erfindungsgemäße Zusammensetzung oder Harzbeschichtung enthält. Zu den Schichtstoffen im Sinne dieser Erfindung zählen neben den Kompaktplatten insbesondere auch HPL ("High Pressure Laminate") und CPL ("Continuous Pressing Laminates") Schichtstoffe.

Gemäß einer weiteren Ausführungsform des erfindungsgemäßen Laminats handelt es sich um ein Laminatbodenpaneel, welches z.B. im Fußbodenbereich eingesetzt wird, und welches auf der Oberseite eine Schicht erfindungsgemäße Harz-Zusammensetzung oder die erfindungsgemäße Harzbeschichtung aufweist. Bevorzugt umfasst dieses Laminatpaneel als Laminatträgermaterial eine Holzwerkstoffplatte, insbesondere eine Holzfaserplatte, auf die ein erfindungsgemäßes Imprägnat aufgebracht ist. Für das Laminatträgermaterial und das Imprägnat gilt das bereits oben Gesagte. Bevorzugt ist die Holzwerkstoffplatte eine Span-, MDF- oder HDF-Platte. Bevorzugt ist das Imprägnat ein imprägniertes Dekorpapier. Laminate in Form eines Fußbodenpaneels können insbesondere den folgenden Schichtaufbau aufweisen (die Reihenfolge ergibt sich aus einer Betrachtung ausgehend von der Oberseite): 1. Deckschicht (Schicht i) des Imprägnats, bspw. die erfindungsgemäße Harzbeschichtung, insbesondere in Form eines Lacks oder Flüssigoverlays oder erfindungsgemäßes Imprägnat), 2. Optionales Dekorpapier, 3. Optionales Underlay, 4. Trägermaterial (bspw. eine Trägerplatte), 5. Optionaler Gegenzug und 6. optionale Verlegeunterlage.

In dieser Ausführungsform als Fußbodenpaneel ist, bezogen auf die typischen Laminatbödenpaneele, das Dekorpapier typischerweise die optisch wahrgenommene Oberfläche, auf der z.B. Motive aufgedruckt sein können. Auf diesem Dekorpapier befindet sich die transparente Harzbeschichtung. Es ist jedoch auch möglich, direkt das Laminatträgermaterial oder darauf liegende Schichten zu bedrucken und auf diese die Harz-Zusammensetzung oder die Harzbeschichtung aufzutragen. Erfindungsgemäße Laminate können optional ein Underlay (z.B. ein sogenanntes Kraftpapier) aufweisen. Vorzugsweise befindet sich dieses unterhalb der Dekorpapierlage. Ein Underlay wird z.B. in der Regel bei Laminatbödenpaneelen hoher Beanspruchungsklassen verwendet. Die Beanspruchungsklassen der Laminatfußböden werden beispielsweise in der EN 13329 geregelt. Laminatböden der niedrigeren Beanspruchungsklassen nutzen in der Regel kein Underlay. Underlays können ebenfalls mit der erfindungsgemäßen Harz-Zusammensetzung imprägniert, getränkt oder beschichtet sein. Gemäß dieser Ausführungsform der Erfindung weisen die Laminate auch auf ihrer Unterseite eine erhöhte Widerstandsfähigkeit sowie antimikrobielle Eigenschaften auf.

So weist beispielsweise ein typisches, als Fußbodenpaneel zum Einsatz kommendes Laminat mindestens die folgenden Schichten auf: Gegenzugpapier, (Träger-)Holzwerkstoffplatte, Dekorpapier und mit einem Imprägnierharz imprägniertes Overlaypapier und/oder eine oberflächliche Harzbeschichtung. Die Verlegeunterlage kann insbesondere eine elastische Verlegeunterlage sein. Diese kann unter den Gegenzug bzw. die Gegenzugschicht und/oder unterseitig zum Laminatträgermaterial aufgebracht sein. In Frage kommen hier beispielsweise Korkschichten zum Geh- und/oder Trittschallschutz, sowie Unterlagsmatten aus Polystyrol, Polyethylen, Polypropylen, Polyurethanschäumen oder Cellulosefasern.

Die Herstellung solcher Laminatpaneele als Fußbodenbelag oder Laminaten für den Möbelbau sind dem Fachmann allgemein bekannt. Hierbei wird das Dekor- und/oder Overlaypapier meist vorher in einem separaten Schritt mit dem Imprägnierharz imprägniert, getränkt oder beschichtet, und anschließend getrocknet. In langen Bahnen aufgerollt ist dieses Imprägnat als Vorprodukt lagerfähig. Anschließend wird auf die Oberseite des Laminatträgermaterials, insbesondere der (Träger-)Holzwerkstoffplatte, das Dekor- und/oder Overlaypapier enthaltende Imprägnat aufgelegt. Für diesen Arbeitsschritt werden meistens Laser zum Ausrichten der Imprägnate genutzt, damit beim späteren Verlegen keine Abweichungen im Dekorbild auftreten. Es ist aber auch denkbar, dass das Laminatträgermaterial, insbesondere die (Träger-)Holzwerkstoffplatte, anstatt mit einem Dekor- und/oder Overlaypapier nur mit einem Flüssig-Overlay beschichtet wird. Meistens gleichzeitig mit dem Aufbringen des das Dekor- und/oder Overlaypapier enthaltenden Imprägnats wird ein Gegenzug bzw. eine Gegenzugschicht auf der Unterseite des Laminatträgermaterials, insbesondere der (Träger-)Holzwerkstoffplatte, aufgebracht. Optional können bei der Herstellung von beispielsweise Fußbodenpaneelen oder Laminaten für die Möbelherstellung in einem weiteren Arbeitsgang in die Kanten der Laminatpaneele Nut und Feder bzw. mit mehreren Fräsköpfen Profile eingefräst werden, welche zum späteren Verbinden der einzelnen Fußbodenpaneele oder Möbelteile genutzt werden können.

Bei Laminaten für die Möbelherstellung kann das Laminatträgermaterial, insbesondere die Holzwerkstoffplatte oder die Vollholzplatte oder der Schichtstoff, auf seinen Hauptseiten und optional auch an seinen Kanten mit einer Schicht erfindungsgemäßer Harz-Zusammensetzung oder einer erfindungsgemäßen Harzbeschichtung beschichtet werden. In diesen Ausführungsformen kann es sich bei der erfindungsgemäßen Harzbeschichtung insbesondere um eine Lackschicht handeln. Wie weiter oben beschrieben, kann die erfindungsgemäße Zusammensetzung bzw. die daraus erhältliche Harzbeschichtung auch als antimikrobiell wirkende Lackschicht fungieren. Hierzu kann die erfindungsgemäße Zusammensetzung bzw. die erfindungsgemäße Harzbeschichtung dem Fachmann aus der Lackherstellung bekannte Zusatzstoffe enthalten. Insbesondere kann die erfindungsgemäße Zusammensetzung bzw. die erfindungsgemäße Harzbeschichtung Farbpigmente enthalten.

Gegenstand der Erfindung ist ferner ein Verfahren zur Herstellung eines Laminats, umfassend die folgenden Schritte
i. Aufbringen der erfindungsgemäßen Harz-Zusammensetzung, oder eines erfindungsgemäßen Imprägnats auf ein Laminatträgermaterial, und
ii. Verpressen der Komponenten aus Schritt i.

Das Aufbringen der Harz-Zusammensetzung oder eines Imprägnats in Schritt i) kann durch die in der holz- und papierverabeitenden Industrie gängigen Methoden vorgenommen werden. Das Aufbringen der Harz-Zusammensetzung auf das Laminatträgermaterial kann z.B. durch Sprühen, Tauchen, Rakeln oder Walzen erfolgen.

Die Harzbeschichtung kann derart aufgebracht werden, dass zunächst Harz-Zusammensetzung aufgebracht und diese dann unter Temperatur, Druck und/oder zusätzlicher Härterzugabe oder energiereiche Strahlung, insbesondere UV-Strahlung, ganz oder teilweise ausgehärtet wird. Es ist bei dem erfindungsgemäßen Verfahren vorgesehen, dass das Aufbringen der Harz-Zusammensetzung direkt auf das Laminatträgermaterial erfolgt. Es erfolgt keine vorherige Beschichtung mit einem Imprägnier- oder Tränkharz.

Wenn in Schritt i) eine Harz-Zusammensetzung auf das Laminatträgermaterial wird, kann die Herstellung des Laminats auch ohne das Verpressen in Schritt ii) erfolgen.

Das Aufbringen des Imprägnats in Schritt i) kann durch Auflegen des Imprägnats auf das Laminatträgermaterial erfolgen.

Es ist auch denkbar, dass sich zwischen der Harz-Zusammensetzung oder dem Imprägnat und dem Laminatträgermaterial mindestens eine der bereits oben näher erläuterten weiteren Schichten befindet. Hierfür gilt das bereits oben Gesagte.

Das Verpressen der Komponenten aus Schritt i) in Schritt ii) kann durch die in der holz- und papierverabeitenden Industrie gängigen Methoden vorgenommen werden.

Hierbei werden typischerweise die zumindest zwei Schichten durch Verpressen unter erhöhtem Druck und/oder erhöhter Temperatur verbunden. Dabei verflüssigt sich die Harz-Zusammensetzung kurzzeitig und reagiert sodann im Wege einer Polymerisation zum fertigen und dauerhaft mit der weiteren Schicht verbundenen Laminat.

Vor dem Verpressen wird die entweder direkt aufgebrachte Harz-Zusammensetzung oder das Imprägnat auf eine bestimmte Restfeuchte, bevorzugt auf 2 bis 8 Gew.-%, besonders bevorzugt auf 4 bis 6 Gew.-% getrocknet.

Geeignete Temperaturen für das Verpressen sind Temperaturen von 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden. Optimale Ergebnisse können erzielt werden, wenn das Verpressen bei einer Presstemperatur von mindestens etwa 150 °C durchgeführt wird.

Die Pressgeschwindigkeit beim Heißpressen auf kontinuierlichen Doppelbandpressen beträgt vorzugsweise 400 mm/s, bevorzugt 450 mm/s und insbesondere bevorzugt 500 mm/s.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm², verwendet wird. Derartige Drücke stellen eine besonders gute Verklebung der Schichten des Laminats miteinander sicher. Zudem kann mit einem solchen Pressdruck eine hohe Festigkeit des Laminats erreicht werden.

In einer Ausführungsform der Erfindung weist das Verfahren den zusätzlichen Schritt
iii) Entfetten mindestens einer der Oberflächen des Laminats oder Imprägnats
auf.

Bevorzugt handelt es sich bei der Oberfläche des Laminats oder Imprägnats, die entfettet wird, um die Oberfläche, welche die erfindungsgemäße Harz- Zusammensetzung oder das erfindungsgemäße Imprägnat enthält.

Überraschend wurde gefunden, dass eine Entfettung der Oberfläche im Zuge der Herstellung eines erfindungsgemäßen Laminats zu einer weiteren Verbesserung der antimikrobiellen Eigenschaften führt.

Möglichkeiten zur Entfettung von Oberflächen sind dem Fachmann allgemein bekannt. Dies kann beispielsweise durch Behandlung mit einem Reinigungsmittel erfolgen, welches hydrophobe Substanzen wie Fette lösen kann. Das Reinigungsmittel kann ein organisches Lösungsmittel enthalten oder hieraus bestehen. Insbesondere können die Oberflächen mit einem organischen Lösungsmittel in Berührung gebracht und dann abgerieben werden.

Bevorzugte organische Lösungsmittel sind ausgewählt aus der Gruppe bestehend aus Alkoholen, Ethern, Aldehyden und Ketonen. In der Praxis wurden beispielsweise mit Ethanol, Isopropanol, deren Ether oder Aceton als Lösungsmittel gute Ergebnisse bei der Entfettung der Oberfläche in Schritt iii) erzielt.

Nachfolgend wird die Erfindung beispielhaft anhand von Ausführungsbeispielen näher beschrieben.

### Beispiel 1: Herstellung einer erfindungsgemäßen Harzzusammensetzung

19g einer 10%-igen PHMG Hydrochlorid (PHMG-HCl) Lösung in Ethanol wurde zwei Stunden unter Rückfluss gerührt, bis die Lösung klar war, anschließend auf Raumtemperatur abgekühlt und zu 160,7 g einer 25%igen Araldite 506 (Epoxidharz) Lösung in Butanol-1 gegeben und bei 25°C für 30 Min gerührt. Daraufhin wurden 212 g einer 2,5%igen Lösung von Triethylentetraamin als Härter in Butanol-1 zu der oben genannten Mischung hinzugegeben und 5 Min bei 25°C gerührt.

### Beispiel 2: Herstellung einer erfindungsgemäßen Harzbeschichtung

Die in Beispiel 1 erhaltene Mischung wurde mit 18 g des Weißpigments Magnesiumoxid homogen vermischt und auf eine mit einem ausgehärteten Melamin-Formaldehydharz vorbeschichtete Laminatplatte per Pinsel aufgetragen und bei 30°C für 24 h getrocknet. Hierbei wird das an den primären Amingruppen kovalent modifizierte Polyhexamethylenguanidin (PHMG) ausgehärtet und es entsteht eine erfindungsgemäße Harzbeschichtung.

Der Flächenauftrag lag bei ca. 130 g/m² und die Konzentration des an den primären Amingruppen modifizierten PHMG bei 3% (berechnet als PHMG-HCl).

### Beispiel 3: Herstellung einer erfindungsgemäßen Imprägnierharz Zusammensetzung

In diesem Beispiel wurde eine Imprägnierharz-Zusammensetzung im Sinne der Erfindung wie folgt hergestellt:

**Materialien:**

| | |
|---|---|
| 2780 g | Melamin-Formaldehyd-Tränkharz 62 % Festharzgehalt |
| 345 g | an den primären Amingruppen kovalent modifiziertes |
| | Polyhexamethylenguanidin (PHMG) |
| 14,5 g | Härter MH836 Fa. INEOS Melamines |
| 5,0 g | nichtionisches Netzmittel Deurowet MA 21 |
| 2,5 g | nichtionisches Trennmittel Deurolease PHE |

Die oben angegebenen Materialien wurden in einem 5 1-Dreihalskolben bei 25 °C unter Rühren miteinander vermengt und 15 Minuten innig gemischt.

Die Zusammensetzung hatte einen Feststoffgehalt von 57,9 Gew.-%, bestimmt nach der Trockenschrankmethode (1 g Einwaage 2 h bei 120 °C trocknen) und eine Trübungszeit von 160 s bei 100 °C im siedenden Wasserbad.

### Beispiel 4: Herstellung eines Imprägnats

Im Folgenden wurde ein Imprägnat mit der Imprägnierharz-Zusammensetzung aus Beispiel 3 hergestellt.

Ein Dekorpapier mit einer Grammatur von 65 g/m² wurde mit 65 g/m² der Imprägnierharz-Zusammensetzung aus Beispiel 1 per Handrakelgerät der Firma CHM GmbH Automatisierungstechnik beharzt. Im Anschluss an die Beharzung wurde das Imprägnat bei 120 °C im Umluftofen 3 Minuten getrocknet. Die Restfeuchte des Imprägnats betrug 6 Gew.-%.

### Beispiel 5: Herstellung eines Laminats

Das Imprägnat aus Beispiel 4 wurde auf einer 7.4 mm HDF-Trägerplatte (50x50 cm) bei 192 °C unter einem Druck von 60 bar innerhalb von 23 s verpresst. Ein Gegenzugpapier wurde unterseitig zur Trägerplatte zur Sicherstellung der Planlage angebracht.

## Patentansprüche

1. Harz-Zusammensetzung enthaltend ein an den primären Amingruppen kovalent modifiziertes Polyhexamethylenguanidin (PHMG) und/oder ein an den primären Amingruppen kovalent modifiziertes Polyhexamethylenbiguanid (PHMB), wobei die Harz-Zusammensetzung eine Imprägnierharz-Zusammensetzung ist und ferner ein Melamin-Formaldehyd-Harz, ein nichtionisches und/oder kationisches Netzmittel, ein nichtionisches Trennmittel und einen Härter umfasst.

2. Harz-Zusammensetzung nach Anspruch 1, **dadurch gekennzeichnet, dass** das an den primären Amingruppen kovalent modifizierte Polyhexamethylenguanidin (PHMG) ein Additionsprodukt aus Polyhexamethylenguanidin und einem Epoxidharz oder ein Additionsprodukt aus Polyhexamethylenguanidin und einem oligomeren Diisocyanat ist und/oder wobei das an den primären Amingruppen kovalent modifizierte Polyhexamethylenbiguanid (PHMB) ein Additionsprodukt aus Polyhexamethylenbiguanid und einem Epoxidharz oder ein Additionsprodukt aus Polyhexamethylenbiguanid und einem oligomeren Diisocyanat ist.

3. Harz-Zusammensetzung nach Anspruch 2, **dadurch gekennzeichnet, dass** das Epoxidharz ausgewählt ist aus der Gruppe, bestehend aus Bisphenol-basierten Epoxidharzen, Novolak- Epoxidharzen, aliphatischen glycidyl-basierten Epoxidharzen und deren Mischungen.

4. Harz-Zusammensetzung nach Anspruch 2, **dadurch gekennzeichnet, dass** das oligomere Diisocyanat ausgewählt ist aus der Gruppe, bestehend aus oligomerem Toluoldiisocyanat, oligomerem Diphenylmethandiisocyanat (MDI), oligomerem Isophorondiisocyanat (IPDI), oligomerem 4,4- Dicyclohexylmethandiisocyanat (H12MDI) und oligomerem Pentamethylen-Diisocyanat (PDI) und deren Mischungen.

5. Harz-Zusammensetzung nach einem der Ansprüche 1 bis 4, **dadurch gekennzeichnet, dass** das an den primären Amingruppen kovalent modifizierte Polyhexamethylenguanidin (PHMG) und/oder das an den primären Amingruppen kovalent modifizierte Polyhexamethylenbiguanid (PHMB) als Salz, insbesondere als wasserlösliches Salz vorliegt.

6. Harz-Zusammensetzung nach Anspruch 1 bis 5, **dadurch gekennzeichnet, dass** diese höchstens 0,05 Gew.-% anionische Netzmittel und/oder höchstens 0,05 Gew.-% anionische Trennmittel, jeweils bezogen auf den Festharzanteil des Harzes, oder kein anionisches Netzmittel und/oder kein anionisches Trennmittel enthält.

7. Harz-Zusammensetzung nach Anspruch 6, **dadurch gekennzeichnet, dass**
i. das nichtionische Netzmittel ausgewählt ist aus der Gruppe, bestehend aus Polyalkylenglycolether, Alkylpolyglucosiden und Nonylphenolethoxylaten und Fettalkoholethoxylaten und deren Mischungen;
ii. das nichtionische Trennmittel ausgewählt ist aus der Gruppe, bestehend aus Fettsäureglyceriden, ethoxylierten Fettalkoholen und höheren Fettsäurephosphatestern und deren Mischungen; und/oder
iii. der Härter ausgewählt ist aus der Gruppe, bestehend aus para-Toluolsulfonsäure, Morpholin, para-Toluolsulfonsäure-Morpholinsalze, Alkylaminsalze, Ammonium-Salze, Morpholin-p-Toluolsulfonat, Ethanolamin-Hydrochlorid und deren Mischungen.

8. Harz-Zusammensetzung nach einem der Ansprüche 6 oder 7, **dadurch gekennzeichnet, dass** die Harz-Zusammensetzung eine oder mehrere der folgenden Komponenten in den folgenden Mengen enthält:
i. das Melamin-Formaldehyd Harz in einer Menge von 25 bis 60 Gew.-%, bezogen auf das Gesamtgewicht der Harz-Zusammensetzung;
ii. das nichtionische und/oder kationische Netzmittel in einer Menge von 0,1 bis 3 Gew.-%, bevorzugt von 0,2 bis 1,0 Gew.-% und insbesondere bevorzugt von 0,2 bis 0,4 Gew.-%, bezogen auf den Festharzanteil des Harzes;
iii. das nichtionische Trennmittel in einer Menge von 0,1 bis 1,0 Gew.-%, bevorzugt von 0,2 bis 0,5 Gew.-% und insbesondere bevorzugt von 0,2 bis 0,4 Gew.-%, bezogen auf den Festharzanteil des Harzes; und/oder
iv. den Härter in einer Menge von 0,1 bis 1,0 Gew.-%, bevorzugt von 0,3 bis 0,8 Gew.-% und insbesondere bevorzugt von 0,5 bis 0,6 Gew.-%, bezogen auf den Festharzanteil des Harzes.

9. Harz-Zusammensetzung nach einem der Ansprüche 1 bis 8, **dadurch gekennzeichnet, dass** die Harz-Zusammensetzung das an den primären Amingruppen kovalent modifizierte Polyhexamethylenguanidin (PHMG) und/oder das an den primären Amingruppen kovalent modifizierte Polyhexamethylenbiguanid (PHMB) in einer Menge von 0,01 bis 10 Gew. %, bevorzugt von 1,0 bis 5,0 Gew.-% und insbesondere bevorzugt von 1,0 bis 3,0 Gew.-%, bezogen auf den Festharzanteil des Harzes enthält.

10. Imprägnat, enthaltend
i. eine Harz-Zusammensetzung nach einem der Ansprüche 1 bis 9, und
ii. mindestens ein Imprägnatträgermaterial.

11. Imprägnat nach Anspruch 10, **dadurch gekennzeichnet, dass** das Imprägnat die Harz-Zusammensetzung nach einem der Ansprüche 1 bis 9 in einer Menge von
i. 30 bis 600 Gew.-%, 350 bis 550 Gew.-% oder 100 bis 180 Gew.-%, jeweils bezogen auf das Trockengewicht des Imprägnatträgermaterials, und/oder
ii. 10 g/m² bis 250 g/m², bevorzugt 50 g/m² bis 150 g/m² und insbesondere bevorzugt 80 g/m² bis 120 g/m²,
enthält.

12. Imprägnat nach Anspruch 10 oder 11, **dadurch gekennzeichnet, dass** das mindestens eine Imprägnatträgermaterial ausgewählt ist, aus der Gruppe, bestehend aus Papier, Vlies, Glasvlies, Faservlies, Gewirke, Dekorpapier, Overlaypapier, Karton, Regeneratpapier, Natronkraftpapier, Pappe und Halbzellstoffen.

13. Laminat, enthaltend
iii. mindestens ein Laminatträgermaterial, und
iv. ein Imprägnat nach einem der Ansprüche 10 bis 12 oder eine Harz-Zusammensetzung nach einem der Ansprüche 1 bis 9.

14. Laminat nach Anspruch 13, **dadurch gekennzeichnet, dass** das mindestens eine Laminatträgermaterial ausgewählt ist, aus der Gruppe, bestehend aus Papier, Imprägnat, Vlies, Faservlies, Gewirke, Dekorpapier, Karton, Kernkarton, Pappe, Halbzellstoffe, Kork, Holz, Holzwerkstoffen und Vollholzplatten oder eine Kombination hiervon enthält.

15. Verfahren zur Herstellung eines Laminats nach einem der Ansprüche 13 oder 14, umfassend die folgenden Schritte
i. Aufbringen
- der Harz-Zusammensetzung nach einem der Ansprüche 1 bis 9, oder
- des Imprägnats nach einem der Ansprüche 10 bis 12, auf ein Laminatträgermaterial;
ii. Verpressen der Komponenten aus Schritt i.

16. Verfahren zur Herstellung eines Laminats nach Anspruch 15, ferner umfassend den Schritt
iii. Entfetten mindestens einer der Oberflächen des Laminats oder Imprägnats.

17. Verwendung einer Harz-Zusammensetzung nach einem der Ansprüche 1 bis 9 in der Holzwerkstoff-, Imprägnat- und/oder Laminatherstellung.

## Claims

1. Resin composition containing a polyhexamethylene guanidine (PHMG) which is covalently modified at the primary amine groups and/or a polyhexamethylene biguanide (PHMB) which is covalently modified at the primary amine groups, wherein the resin composition is an impregnating resin composition and further comprises a melamine-formaldehyde resin, a nonionic and/or cationic wetting agent, a nonionic release agent and a curing agent.

2. Resin composition according to claim 1, **characterized in that** the polyhexamethylene guanidine (PHMG) which is covalently modified at the primary amine groups is an addition product of polyhexamethylene guanidine and an epoxy resin or an addition product of polyhexamethylene guanidine and an oligomeric diisocyanate, and/or the polyhexamethylene biguanide (PHMB) which is covalently modified at the primary amine groups being an addition product of polyhexamethylene biguanide and an epoxy resin or an addition product of polyhexamethylene biguanide and an oligomeric diisocyanate.

3. Resin composition according to claim 2, **characterized in that** the epoxy resin is selected from the group consisting of bisphenol-based epoxy resins, novolak epoxy resins, aliphatic glycidyl-based epoxy resins and mixtures thereof.

4. Resin composition according to claim 2, **characterized in that** the oligomeric diisocyanate is selected from the group consisting of oligomeric toluene diisocyanate, oligomeric diphenylmethane diisocyanate (MDI), oligomeric isophorone diisocyanate (IPDI), oligomeric 4,4-dicyclohexylmethane diisocyanate (H12MDI) and oligomeric pentamethylene diisocyanate (PDI) and mixtures thereof.

5. Resin composition according to any of claims 1 to 4, **characterized in that** the polyhexamethylene guanidine (PHMG) which is covalently modified at the primary amine groups and/or the polyhexamethylene biguanide (PHMB) which is covalently modified at the primary amine groups is present as a salt, in particular as a watersoluble salt.

6. Resin composition according to claims 1 to 5, **characterized in that** it contains at most 0.05 wt.% of anionic wetting agents and/or at most 0.05 wt.% of anionic release agents, in each case based on the solid resin content of the resin, or no anionic wetting agent and/or no anionic release agent.

7. Resin composition according to claim 6, **characterized in that**
i. the nonionic wetting agent is selected from the group consisting of polyalkylene glycol ethers, alkyl polyglucosides and nonylphenol ethoxylates and fatty alcohol ethoxylates and mixtures thereof;
ii. the nonionic release agent is selected from the group consisting of fatty acid glycerides, ethoxylated fatty alcohols and higher fatty acid phosphate esters and mixtures thereof; and/or
iii. the curing agent is selected from the group consisting of para-toluenesulfonic acid, morpholine, para-toluenesulfonic acid morpholine salts, alkylamine salts, ammonium salts, morpholine-p-toluenesulfonate, ethanolamine hydrochloride and mixtures thereof.

8. Resin composition according to either claim 6 or claim 7, **characterized in that** the resin composition contains one or more of the following components in the following amounts:
i. the melamine-formaldehyde resin in an amount of from 25 to 60 wt.%, based on the total weight of the resin composition;
ii. the nonionic and/or cationic wetting agent in an amount of from 0.1 to 3 wt.%, preferably from 0.2 to 1.0 wt.% and particularly preferably from 0.2 to 0.4 wt.%, based on the solid resin content of the resin;
iii. the nonionic release agent in an amount of 0.1 to 1.0 wt.%, preferably from 0.2 to 0.5 wt.% and particularly preferably from 0.2 to 0.4 wt.%, based on the solid resin content of the resin; and/or
iv. the curing agent in an amount of from 0.1 to 1.0 wt.%, preferably from 0.3 to 0.8 wt.% and particularly preferably from 0.5 to 0.6 wt.%, based on the solid resin content of the resin.

9. Resin composition according to any of claims 1 to 8, **characterized in that** the resin composition contains the polyhexamethylene guanidine (PHMG) which is covalently modified at the primary amine groups and/or the polyhexamethylene biguanide (PHMB) which is covalently modified at the primary amine groups in an amount of from 0.01 to 10 wt.%, preferably from 1.0 to 5.0 wt.% and particularly preferably from 1.0 to 3.0 wt.%, based on the solid resin content of the resin.

10. Impregnate containing
i. a resin composition according to any of claims 1 to 9, and
ii. at least one impregnate carrier material.

11. Impregnate according to claim 10, **characterized in that** the impregnate contains the resin composition according to any of claims 1 to 9 in an amount of
i. from 30 to 600 wt.%, 350 to 550 wt.% or 100 to 180 wt.%, in each case based on the dry weight of the impregnate carrier material, and/or
ii. from 10 g/m² to 250 g/m², preferably 50 g/m² to 150 g/m² and particularly preferably 80 g/m² to 120 g/m².

12. Impregnate according to either claim 10 or claim 11, **characterized in that** the at least one impregnate carrier material is selected from the group consisting of paper, non-woven fabric, glass non-woven fabric, fiber non-woven fabric, knitted fabric, decor paper, overlay paper, cardboard, regenerated paper, soda kraft paper, paperboard and semi-chemical paper pulps.

13. Laminate containing
iii. at least one laminate carrier material, and
iv. an impregnate according to any of claims 10 to 12 or a resin composition according to any of claims 1 to 9.

14. Laminate according to claim 13, **characterized in that** the at least one laminate carrier material is selected from the group consisting of paper, impregnate, non-woven fabric, fiber non-woven fabric, knitted fabric, decor paper, cardboard, core board, paperboard, semi-chemical paper pulps, cork, wood, wood-based materials and solid wood panels or contains a combination thereof.

15. Method for producing a laminate according to either claim 13 or claim 14, comprising the following steps
i. applying
- the resin composition according to any of claims 1 to 9, or
- the impregnate according to any of claims 10 to 12
to a laminate carrier material;
ii. pressing the components from step i.

16. Method for producing a laminate according to claim 15, further comprising the step of
iii. degreasing at least one of the surfaces of the laminate or impregnate.

17. Use of a resin composition according to any of claims 1 to 9 in the manufacture of wood-based materials, impregnates and/or laminates.

## Revendications

1. Composition de résine contenant un polyhexaméthylène guanide (PHMG) modifié de manière covalente sur les groupes amine primaires et/ou un polyhexaméthylène biguanide (PHMB) modifié de manière covalente sur les groupes amine primaires, où la composition de résine est une composition de résine d'imprégnation et comprend en outre une résine mélamine-formaldéhyde, un agent mouillant non ionique et/ou cationique, un agent de séparation non ionique et un durcisseur.

2. Composition de résine selon la revendication 1, **caractérisée en ce que** le polyhexaméthylène guanidine (PHMG) modifié de manière covalente sur les groupes amine primaires est un produit d'addition de polyhexaméthylène guanidine et d'une résine époxy ou un produit d'addition de polyhexaméthylène guanidine et d'un diisocyanate oligomère et/ou où le polyhexaméthylène biguanide (PHMB) modifié de manière covalente sur les groupes amine primaires est un produit d'addition de polyhexaméthylène biguanide et d'une résine époxy ou un produit d'addition de polyhexaméthylène biguanide et d'un diisocyanate oligomère.

3. Composition de résine selon la revendication 2, **caractérisée en ce que** la résine époxy est choisie dans le groupe constitué par les résines époxy à base de bisphénol, les résines époxy novolaques, les résines époxy à base de glycidyle aliphatiques et leurs mélanges.

4. Composition de résine selon la revendication 2, **caractérisée en ce que** le diisocyanate oligomère est choisi dans le groupe constitué par le diisocyanate de toluène oligomère, le diisocyanate de diphénylméthane (MDI) oligomère, le diisocyanate d'isophorone (IPDI) oligomère, le diisocyanate de 4,4-dicyclohexylméthane (H12MDI) oligomère et le diisocyanate pentaméthylène (PDI) oligomère, et leurs mélanges.

5. Composition de résine selon l'une quelconque des revendications 1 à 4, **caractérisée en ce que** le polyhexaméthylène guanide (PHMG) modifié de manière covalente sur les groupes amine primaires et/ou le polyhexaméthylène biguanide (PHMB) modifié de manière covalente sur les groupes amine primaires sont présents en tant que sel, en particulier en tant que sel soluble dans l'eau.

6. Composition de résine selon les revendications 1 à 5, **caractérisée en ce qu'**elle contient au plus 0,05 % en poids d'agents mouillants anioniques et/ou au plus 0,05 % en poids d'agents de séparation anioniques, respectivement rapporté à la teneur en résine solide de la résine, ou ne contient pas d'agent mouillant anionique et/ou d'agent de séparation anionique.

7. Composition de résine selon la revendication 6, **caractérisée en ce que**
i. l'agent mouillant non ionique est choisi dans le groupe constitué par les éthers de polyalkylène glycol, les polyglucosides d'alkyle et les éthoxylates de nonylphénol et les éthoxylates d'alcool gras, et leurs mélanges;
ii. l'agent de séparation non ionique est choisi dans le groupe constitué par les glycérides d'acides gras, les alcools gras éthoxylés et les esters de phosphate d'acide gras supérieurs, et leurs mélanges; et/ou
iii. le durcisseur est choisi dans le groupe constitué par l'acide paratoluènesulfonique, la morpholine, les sels d'acide para-toluènesulfonique-morpholine, les sels d'alkylamine, les sels d'ammonium, la morpholine-p-toluènesulfonate, le chlorhydrate d'éthanolamine et leurs mélanges.

8. Composition de résine selon l'une quelconque des revendications 6 ou 7, **caractérisée en ce que** la composition de résine contient un ou plusieurs des composants suivants en quantités suivantes:
i. la résine mélamine-formaldéhyde en une quantité de 25 à 60 % en poids, rapporté au poids total de la composition de résine;
ii. l'agent mouillant non ionique et/ou cationique en une quantité de 0,1 à 3 % en poids, de préférence de 0,2 à 1,0 % en poids et de manière particulièrement préférée de 0,2 à 0,4 % en poids, rapporté à la teneur en résine solide de la résine;
iii. l'agent de séparation non ionique en une quantité de 0,1 à 1,0 % en poids, de préférence de 0,2 à 0,5 % en poids et de manière particulièrement préférée de 0,2 à 0,4 % en poids, rapporté à la teneur en résine solide de la résine; et/ou
iv. le durcisseur en une quantité de 0,1 à 1,0 % en poids, de préférence de 0,3 à 0,8 % en poids et de manière particulièrement préférée de 0,5 à 0,6 % en poids, rapporté à la teneur en résine solide de la résine.

9. Composition de résine selon l'une quelconque des revendications 1 à 8, **caractérisée en ce que** la composition de résine contient le polyhexaméthylène guanide (PHMG) modifié de manière covalente sur les groupes amine primaires et/ou le polyhexaméthylène biguanide (PHMB) modifié de manière covalente sur les groupes amine primaires en une quantité de 0,01 à 10 % en poids, de préférence de 1,0 à 5,0 % en poids et de manière particulièrement préférée de 1,0 à 3,0 % en poids, rapporté à la teneur en résine solide de la résine.

10. Produit d'imprégnation, contenant
i. une composition de résine selon l'une quelconque des revendications 1 à 9, et
ii. au moins un substrat de produit d'imprégnation.

11. Produit d'imprégnation selon la revendication 10, **caractérisé en ce que** le produit d'imprégnation contient la composition de résine selon l'une quelconque des revendications 1 à 9 en une quantité de
i. 30 à 600 % en poids, 350 à 550 % en poids ou 100 à 180 % en poids, respectivement, rapporté au poids sec du substrat de produit d'imprégnation, et/ou
ii. 10 g/m² à 250 g/m², de préférence 50 g/m² à 150 g/m² et de manière particulièrement préférée 80 g/m² à 120 g/m².

12. Produit d'imprégnation selon la revendication 10 ou 11, **caractérisé en ce que** l'au moins un substrat de produit d'imprégnation est choisi dans le groupe constitué par le papier, le non-tissé, le non-tissé de verre, le non-tissé de fibres, le tricot, le papier décoratif, le papier de recouvrement, le carton, le papier de caoutchouc régénéré, le papier kraft à la soude, le carton-pâte et la pâte mi-chimique.

13. Stratifié, contenant
iii. au moins un substrat support de stratifié, et
iv. un produit d'imprégnation selon l'une quelconque des revendications 10 à 12 ou une composition de résine selon l'une quelconque des revendications 1 à 9.

14. Stratifié selon la revendication 13, **caractérisé en ce que** l'au moins un substrat support de stratifié est choisi dans le groupe constitué par le papier, le produit d'imprégnation, le non-tissé, le non-tissé en fibres, le tricot, le papier décoratif, le carton, l'âme en carton, le carton-pâte, la pâte mi-chimique, le liège, le bois, les matériaux à base de bois et les panneaux de bois massif ou contient une combinaison de ceux-ci.

15. Procédé destiné à la fabrication d'un stratifié selon l'une des revendications 13 ou 14, comprenant les étapes suivantes
i. l'application
- de la composition de résine selon l'une quelconque des revendications 1 à 9, ou
- du produit d'imprégnation selon l'une quelconque des revendications 10 à 12, sur un substrat support de stratifié ;
ii. la compression des composants de l'étape i.

16. Procédé de fabrication d'un stratifié selon la revendication 15, comprenant en outre l'étape de
iii. dégraissage d'au moins une des surfaces du stratifié ou du produit d'imprégnation.

17. Utilisation d'une composition de résine selon l'une quelconque des revendications 1 à 9 dans la fabrication de matériaux à base de bois, de produits d'imprégnation et/ou de stratifiés.
